# EUROPEAN PATENT SPECIFICATION

(11) **EP 0 861 551 B1**
(45) Date of publication and mention of the grant of the patent: **14.08.2002**
(21) Application number: 96931154.7
(22) Date of filing: 20.09.1996
(51) Int. Cl.: H04L 29/06

(54) **INFORMATION HANDLING SYSTEM FOR ALLOWING A GENERIC WEB BROWSER TO ACCESS SERVERS OF A PLURALITY OF DIFFERENT PROTOCOL TYPES**
MEHRPROTOKOLLKOMMUNIKATION ZWISCHEN EINEM ALLGEMEINEN NETZBROWSER UND MEHREREN ZUGANGSNETZANBIETERN
SYSTEME GENERIQUE DE TRAITEMENT DE L'INFORMATION PERMETTANT UNE CONSULTATION RAPIDE SUR RESEAU POUR ACCEDER A DES SERVEURS OPERANT SUIVANT DIFFERENTS PROTOCOLES

(30) Priority: 14.11.1995 US 558627; 14.11.1995 US 558626; 14.11.1995 US 558631; 14.11.1995 US 558628
(43) Date of publication of application: 02.09.1998
(73) Proprietor: INTERNATIONAL BUSINESS MACHINES CORPORATION, Armonk, NY 10504 (US)
(72) Inventor: PEERCY, Michael, Cupertino, CA 95014 (US); PRIMM, Michael, Apex, NC 27502 (US); REED, Benjamin, Santa Cruz, CA 95064 (US); WELCH, Steven, Gilroy, CA 95020 (US); MEDFORD, Mitchell, Cary, NC 27511 (US)
(74) Representative: Moss, Robert Douglas
(86) International application number: GB9602317
(87) International publication number: WO9718635

(56) References cited:
- EP-A- 0 524 123
- IEEE TRANSACTIONS ON COMMUNICATION TECHNOLOGY, vol. 34, no. 3, March 1986, NEW YORK US, pages 257-268, XP002032678 P.E.GREEN: "PROTOCOL CONVERSION"
- COMMUNICATIONS OF THE ASSOCIATION FOR COMPUTING MACHINERY, vol. 37, no. 8, August 1994, NEW YORK US, pages 76-82, XP000484284 T.BERNERS-LEE: "THE WORLD-WIDE WEB"
- COMMUNICATIONS OF THE ASSOCIATION FOR COMPUTING MACHINERY, vol. 35, no. 7, July 1992, NEW YORK US, pages 77-98, XP000331522 A.SINHA: "CLIENT-SERVER COMPUTING"
- IBM SYSTEMS JOURNAL, vol. 34, no. 3, September 1995, ARMONK, NEW YORK US, pages 472-499, XP000529593 D.POZEFSKY ET AL: "MULTIPROTOCOL TRANSPORT NETWORKING: ELIMINATING APPLICATION DEPENDENCIES ON COMMUNICATIONS PROTOCOLS"

## Description

### Field of the Invention

The invention relates to an information handling system having a plurality of networked information processing systems and, more particularly, to object oriented technology for developing servers for what is known as the World Wide Web using class libraries. A more extensive description of the background of this invention appears in portions of this description which follow.

### Background of the Invention

In the past couple of years there has been an explosive growth in the use of the globally-linked network of computers known as the Internet, and in particular of the Worldwide Web (WWW), which is one of the facilities provided on top of the Internet. The WWW comprises many pages or files of information, distributed across many different server computer systems. Information stored on such pages can be, for example, details of a company's organization, contact data, product data and company news. This information can be presented to the user's computer system ("client computer system") using a combination of text, graphics, audio data and video data. Each page is identified by a Universal Resource Locator (URL). The URL denotes both the server machine, and the particular file or page on that machine. There may be many pages or URLs resident on a single server.

In order to use the WWW, a client computer system runs a piece of software known as a graphical Web browser, such as WebExplorer (provided as part of the OS/2 operating system from IBM Corporation), or the Navigator program available from Netscape Communications Corporation. "WebExplorer", "OS/2" and "IBM" are trademarks of the International Business Machines Corporation, while "Navigator" and "Netscape" are trademarks of the Netscape Communications Corporation. The client computer system interacts with the browser to select a particular URL, which in turn causes the browser to send a request for that URL or page to the server identified in the URL. Typically the server responds to the request by retrieving the requested page, and transmitting the data for that page back to the requesting client computer system (the client/server interaction is performed in accordance with the hypertext transport protocol ("HTTP")). This page is then displayed to the user on the client screen. The client may also cause the server to launch an application, for example to search for www pages relating to particular topics.

Most WWW pages are formatted in accordance with a computer program written in a language known as HTML (hypertext mark-up language). This program contains the data to be displayed via the client's graphical browser as well as formatting commands which tell the browser how to display the data. Thus a typical Web page includes text together with embedded formatting commands, referred to as tags, which can be used to control the font size, the font style (for example, whether italic or bold), how to lay-out the text, and so on. A Web browser "parses" the HTML script in order to display the text in accordance with the specified format. HTML tags are also used to indicate how graphics, audio and video are manifested to the user via the client's browser.

Most Web pages also contain one or more references to other Web pages, which need not be on the same server as the original page. Such references may generally be activated by the user selecting particular locations on the screen, typically by (double) clicking a mouse control button. These references or locations are known as hyperlinks, and are typically flagged by the browser in a particular manner (for example, any text associated with a hyperlink may be in a different colour). If a user selects the hyperlink, then the referenced page is retrieved and replaces the currently displayed page.

Further information about HTML and the WWW can be found in "World Wide Web and HTML" by Douglas McArthur, p18-26 in Dr Dobbs Journal, December 1994, and in "The HTML SourceBook" by Ian Graham, (John Wiley, New York, 1995).

Generic web browsers which display and accept HTML offer an astounding capability to application developers. Using a browser to implement a user interface has two great advantages:
the communications protocol (HTTP) is built in, and
the user interface environment (HTML) is built in.
Communications and user interfaces are two very expensive areas of application development, mostly because they are extremely platform dependent. Many applications never reach all the customers who could use them because of these two problems.

There currently exists no Web Browser/Server system which transmits using any communication protocol other than HTTP TCP/IP. However, a number of computer installations use a variety of communication protocols, such as NetBIOS, IPX, and serial lines. The users of these installations may wish to use the Web Browser/Server technology without being required to use TCP/IP connections. This technology is limited by that restriction.

One environment in which this technology is especially important is systems management. Efficient systems management is crucial to the operation of computer installations both large and small. To improve the task of systems management, a number of applications have been developed. These attempt to abstract and collate the arcane hardware- and operating system-dependent observations and controls of computer systems in order to give the user or administrator of the systems more power in managing them.

In today's systems management software, the observations and controls are displayed and controlled through graphical user interfaces (GUIs). As it relates to this invention, these systems management applications have the following two problems: (1) the GUIs are restricted to run on specific systems and to communicate with the base systems management objects through limited protocols, and (2) movement of the systems management application to another system or protocol requires recoding the GUI for the new platform. The current technology only serves the systems management data to the systems it supports. There are therefore barriers, in the current technology, to a powerful and flexible systems management interface.

### Summary of the Invention

The present invention provides an information handling system as claimed in claim 1.

Preferably, the invention further involves the system above, wherein said client computer device's means for presenting information uses a specific type of graphical user interface, wherein said client computer device is connected to the Internet and said network is located between the Internet and the server computer device, and wherein said transmission protocol conversion means runs object oriented computer software which includes: an HTML object which accepts HTML request data from said client computing device and converts the accepted HTML request data to the network data format; and an HTTP object which opens and maintains Internet communication between said client and server computer devices, parses the HTML request data received from the client computing device, detects the identity of the specific graphical user interface used by said client computer device, transmits the request data and detected graphical user interface identity to the HTML object, and transfers HTML data between said HTML object and said client computer device via said network and the Internet.

Viewed from a second aspect, the present invention provides a program element for an information handling system as claimed in claim 7.

This invention further allows any web browser connected anywhere on the Internet to serve as a graphical user interface to browse and control the events of a systems management protocol.

### Brief Description of the Drawings

Some of the purposes of the invention having been stated, others will appear as the description proceeds, when taken in connection with the accompanying drawings, in which:
Figure 1A is a perspective view of a typical personal computer system;
Figure 1B is a diagram of an information handling network embodying the apparatus and method according to the present invention;
Figure 2 is a block schematic diagram of a unified planar board for the computer system of Figure 1A;
Figure 3 is a block schematic diagram of an alternative planar board for the computer system of Figure 1A;
Figure 4 is a block schematic diagram of a processor card for use with the alternative planar board of Figure 3;
Figure 5 is a flow diagram of steps taken for communicating system configuration information over the information handling network of Figure 1B according to the present invention;
Figure 6 is a more detailed flow diagram of some of the steps taken in the flow diagram of Figure 5;
Figure 7 is an category diagram of an example framework mechanism;
Figures 8 through 12 are class diagrams for the example framework mechanism of Figure 7;
Figure 13 is an object diagram for the example framework mechanism of Figures 7 through 12;
Figures 14A and 14B are diagrams of an embodiment of the present inventive system management as exercised through the network of Figure 1B; and
Figure 15 is a diagram of the mapping block element shown in Figures 14A and 14B.

### Description of the Preferred Embodiments

What follows is an extended description of technology relevant to the background of this invention. While the sufficiently sophisticated and knowledgeable reader may choose to either scan or not read this background information, the information is important to an understanding of the present invention and is recommended for study.

While the present invention will be described more fully hereinafter with reference to the accompanying drawings, in which a preferred embodiment of the present invention is shown, it is to be understood at the outset of the description which follows that persons of skill in the appropriate arts may modify the invention here described while still achieving the favourable results of this invention. Accordingly, the description which follows is to be understood as being a broad, teaching disclosure directed to persons of skill in the appropriate arts, and not as limiting upon the present invention.

### Hardware Environment

Personal computer systems in general, and IBM personal computers in particular, have attained widespread use for providing computer power to many segments of today's society. A personal computer system can usually be defined as a desk top, floor standing, or portable computer that includes a system unit having a system processor, a display monitor, a keyboard, one or more diskette drives, a fixed disk storage, an optional pointing device such as a "mouse," and an optional printer. These systems are designed primarily to give independent computing power to a single user or small group of users and are inexpensively priced for purchase by individuals or businesses. Examples of such personal computer systems are sold under the trademarks: IBM's PERSONAL COMPUTER, PERSONAL COMPUTER XT, PERSONAL COMPUTER AT and IBM's PERSONAL SYSTEM/2 (hereinafter referred to as the IBM PC, XT, AT, and PS/2, respectively) Models 25, 30, 50, 55, 57, 60, 65, 70, 80, 90 and 95.

These systems can be classified into two general families. The first family, usually referred to as Family 1 Models, uses a bus architecture exemplified by the AT computer and other "IBM compatible" machines. The second family, referred to as Family 2 Models, uses IBM's MICRO CHANNEL bus architecture exemplified by IBM's PS/2 Models 50 through 95. The bus architectures used in Family 1 and Family 2 models are well known in the art.

The IBM PC and XT were the first models of the IBM personal computer line and used the Intel 8088 processor. The next significant change to IBM personal computer systems was the AT which used the Intel 80286 processor. The PS/2 line spanned several of the Intel processors. A system similar to the IBM PC and XT was a version of the PS/2 Model 30 which used an Intel 8086 processor. The PS/2 Models 50 and 60 both used the Intel 80286 processors. The Intel 80386 processor is used in the IBM PS/2 Model 80 and certain versions of the IBM PS/2 Model 70. Other versions of the IBM PS/2 Model 70, as well as the PS/2 Models 90 XP 486 and 95 XP 486, use the Intel 80486 processor. One of the common points in all these systems is the use of an Intel X86 Family processor. A variety of commonly available and well known software operating systems, such as a DOS or an OS/2 operating system, can operate on various members of the Intel X86 Family of processors.

Beginning also with the earliest personal computer system of the Family 1 models, such as the IBM PC, it was recognized that a goal of achieving software-hardware compatibility would be of great importance. In order to achieve this goal, an insulation layer of system resident code, also referred to as "microcode," was established between the hardware and the software. This code provided an operational interface between a user's application program/operating system and the hardware device to relieve the user of the concern about the characteristics of hardware devices. Eventually, the code developed into a basic input/output system (BIOS), for allowing new hardware devices to be added to the system, while insulating the application program/operating system from the peculiarities of the hardware devices. The importance of BIOS was immediately evident because it freed a device driver from depending on specific hardware device characteristics while providing the device driver with an intermediate interface to the hardware device. Because BIOS was an integral part of the computer system and controlled the movement of data in and out of the system processor, it was resident on a system planar board of the system unit and was shipped to the user in either a read-only memory (ROM) or an erasable programmable read-only memory (EPROM). For example, BIOS in the original IBM PC occupied 8K bytes (a kilobyte or "K byte" refers to a quantity of 1024 bytes) of ROM resident on the planar board. In addition to the ROM, the planar board included the system processor, a main random access memory (RAM), and other components which were fixed in a substantially coplanar relationship on the board. The ROM also contained a power-on self test (POST) program which was used to test and initialize the computer system. The accumulation of code resident in the computer system ROM became known as the "system firmware," or simply "firmware." Thus, the firmware included a POST portion and a BIOS portion. Sometimes, BIOS was defined to include the POST program.

As new models of the personal computer family were introduced, the firmware had to be updated and expanded to support new hardware devices such as input/output (I/O) devices. As could be expected, the firmware started to increase in memory size. For example, with the introduction of the IBM PERSONAL COMPUTER AT, the firmware grew to require 32K bytes of ROM. With the introduction of the IBM PERSONAL SYSTEM/2 computer system with MICRO CHANNEL architecture, a significantly new BIOS, known as Advanced BIOS, or ABIOS, was developed. However, to maintain software compatibility, BIOS from the Family 1 models had to be included in the Family 2 models. The Family 1 BIOS became known as Compatibility BIOS or CBIOS. Thus, BIOS evolved to include more than one type of BIOS such as the Compatibility Basic Input Output System (CBIOS) and the Advanced Basic Input Output System (ABIOS). Present architectural definitions for personal computer systems allow for up to 128K bytes of system address space for firmware (system firmware address space).

Today, with the continuing development of new technology, personal computer systems are becoming more sophisticated and are being enhanced more frequently. Because the technology is changing rapidly and new I/O devices are being added to the personal computer systems, effecting modifications and extensions to the firmware have become significant problems in the development cycle of personal computer systems.

With introduction of MICRO CHANNEL architecture, IBM offered a new configuration procedure known as Programmable Option Select (POS). POS is designed to make installation and expansion of system enhancements much easier and less confusing than in previous PCs by eliminating the need for configuring a system using DIP switches, jumpers and headers. Using low power, battery packed CMOS memory PS/2 systems can remember their hardware configuration. The configuration includes the identity of expansion devices and how the expansion devices function in relation to the rest of the system. Every expansion card designed for Micro-Channel has a unique identifying number. When the system boots up, the PS/2 system compares the installed options with the information in its non-volatile memory to detect changes to insure the integrity of its setup. The setup files are automatically incorporated into the file system during configuration procedure using a Reference Diskette. In some IBM PS/2 models, such as the models 70 and 80, the reference diskette comprises a floppy diskette which accompanies the computer system and stores the system configuration information. Although, the configuration procedure of the PS/2 systems is fairly simple, and easy to perform, the reference diskette must be handy or conveniently stored nearby. It is however, possible to lose or misplace the reference diskette after some period of time from the last system configuration. Therefore, it became desirable to store a copy of reference diskette on the DASD.

In Arnold et al. U.S. Patent 5,128,995 assigned to the assignee of the present invention, an apparatus for loading a system reference diskette image from a system portion of a DASD is disclosed in which the DASD has a protected region for storing a boot record, a BIOS image and a system reference diskette. The reason for protecting a portion of DASD arises from the need to prevent contamination and corruption of BIOS. During certain system operation, such as when the processor is under the control of the operating system or when it is running an application, the DASD controller is configured to ignore the protected region.

Increasingly, personal computer systems are linked together to provide an information handling network (e.g., a Local Area Network or LAN) so that a plurality of information processing systems can exchange information, share I/O devices, and utilize a particular direct access storage device (DASD), such as a particular hardfile or diskette. Typically, the information network includes a number of information processing systems known as "clients" and at least one administrator processing system known as "server" all of which are connected or networked with each other via a communication medium, such as copper wire and/or fibre optic cables. Typically, network communications by subsystem components (i.e., client systems or server system) are handled via communication adapter devices which are compliant with one or more network communication protocols, such as Token Ring or Ethernet. Additionally, there have developed wireless mobile clients connected by various radio frequency or infrared radiation protocols to a server. The problems addressed for wired LANs are essentially replicated for wireless LANs.

Obviously, the primary advantages of a networked information handling system is its ability to provide for communication of various types of information among a plurality of information processing systems. Among the information that may be communicated within the network is information relating to status and/or configuration of the system itself. The configuration information may be processed in various fashions, for example, to perform diagnostics or to inform other networked information processing systems of each others configuration and capabilities.

System configuration information has been utilized heretofore to detect faulty conditions within large networked systems. For example, IBM's system 390 is designed to monitor performance within a networked system in real time. Upon detection of a faulty condition, a diagnostic routine is performed to isolate the faulty condition to a defective system component. Thereafter, information relating to the detected faulty condition and the diagnosis result are communicated to a central station via a modem on a telephone line.

The real time fault monitoring and fault communication capability of prior art systems are generally incorporated within the system hardware architecture and/or within the operating system or application software. Unfortunately, real time fault detection as implemented in the large computer system networks is not suitable for smaller information handling systems, such as those comprising personal computers. This is partly because the existing defacto standard operating systems, such as DOS and WINDOWS, do not support fault analysis and reporting capability which is available in the larger systems. More importantly, the present central processing power of personal computer systems makes real time configuration monitoring, fault detection and reporting impractical.

However, there still remains a need for communicating system related information over an information handling network which comprises small information processing systems, such as personal computers, whose operating systems and CPU power does not support communication of system configuration information in real time over the network.

That need has been addressed in networks in which an information handling network has a plurality of information processing systems operating under control of a corresponding number of operating systems, with each information processing system having a predetermined system configuration. The processing system includes detectors for detecting a change in the system configuration based on the predetermined system configuration during an initial microcode load (IML) period prior to loading the operating system. The processing system also includes communication elements for communicating the system configuration information over the network upon detecting the change in the system configuration prior to loading an operating system.

The information handling network may further include an administrator information processing system which has a monitor for monitoring communication over the network and a receiver for receiving the system configuration information as communicated over the network.

The system configuration information may comprise identification for an information processing system where the change in the system configuration is user activated. The administrator information processing system provides an authorization signal allowing or disallowing the user initiated system configuration change.

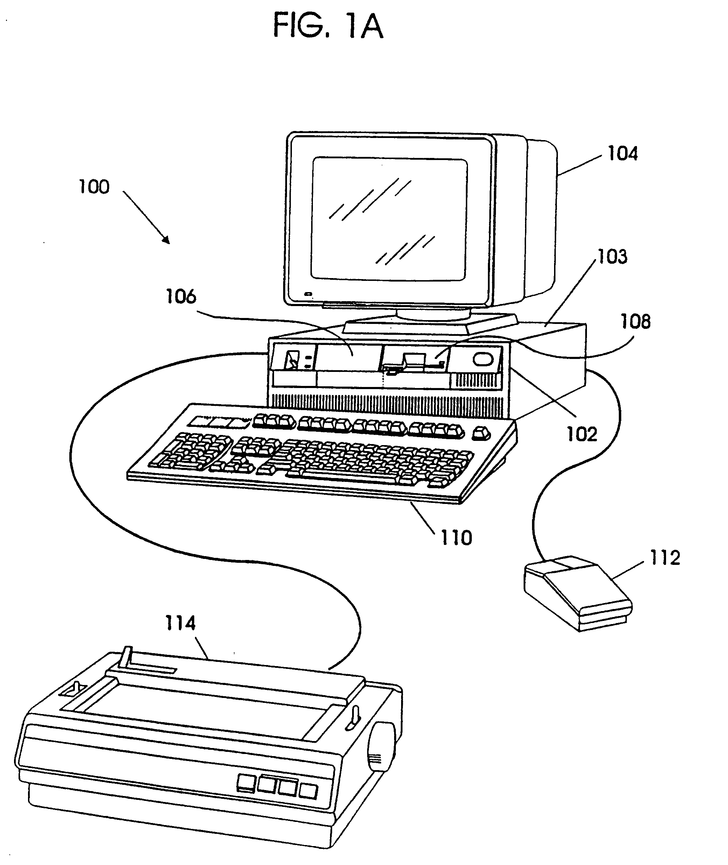

Referring now to the figures, and in particular to Fig. 1A, there is shown a personal computer system 100 which is capable of operating within the information handling network 150 of the present invention. The personal computer system 100 comprises a system unit 102 having a suitable enclosure or casing 103, output device or monitor 104 (such as a conventional video display), input devices such as a keyboard 110, an optional mouse 112, and an optional output device such as a printer 114. Finally, the system unit 102 may include one or more mass storage devices such as a diskette drive 108 (operable with a diskette - not shown) and a direct access storage device (DASD) 106, also known as hard file.

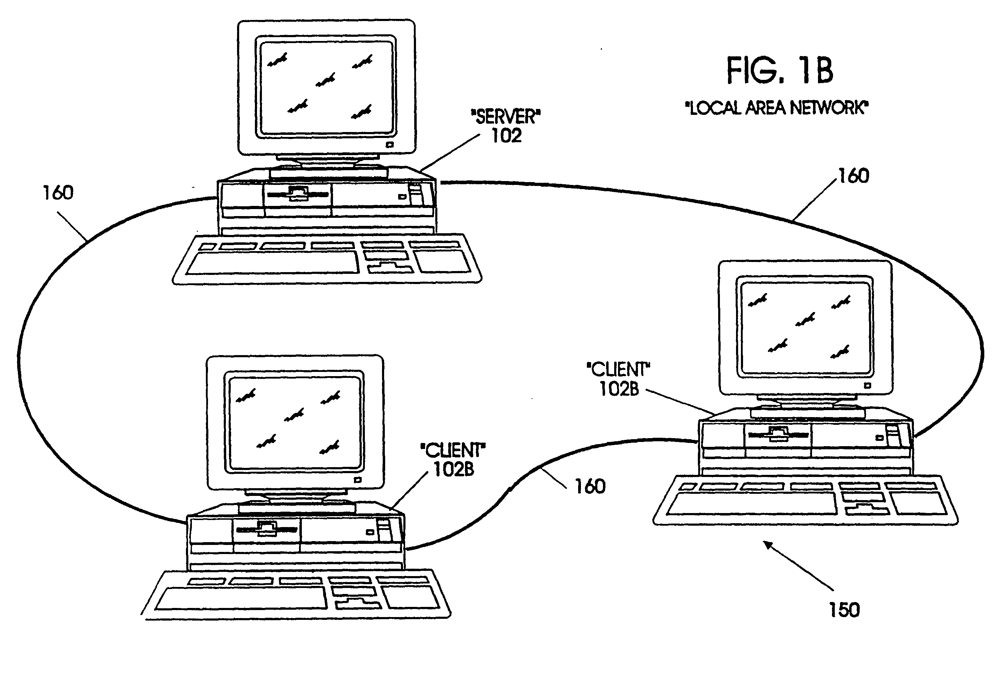

Referring to Fig. 1B, an information handling network 150 is shown. The information handling network 150 comprises a plurality of information processing systems 102 and 102B one or more of which may be identical to the personal computer system 100 of Fig 1A. The processing system 102 is a server which acts as an administrator processing system within the information handling network 150. The processing systems 102B comprise client systems. Typically, The client systems (102B) are identical to the unit 102, except that systems 102B may include no DASD 106 in which case these systems (102B) are referred to as "medialess clients." The information processing systems (102 and 102B) are networked with each other in a well known manner and communicate information signals over the information handling network 150 via cables 160.

In operation, the information processing systems 102 and 102B functions under the control of an operating system, such as IBM's OS/2 operating system or DOS operating system which are suitably loaded after an initial micro load (IML) period. The operating system typically utilizes BIOS which is loaded into the system memory during the IML period. BIOS provides an interface between the hardware devices and the operating system software to enable a programmer or user to program his machine without an in-depth operating knowledge of a particular hardware device. For example, a BIOS diskette module permits a programmer to program the diskette drive without an in-depth knowledge of the diskette drive hardware. Thus, a number of diskette drives designed and manufactured by different companies can be used within the system 100. Also, loaded during the IML period is POST program which performs a self test of the system hardware upon power on to determine system configuration. POST stores the system configuration in an storage device, such as an NVRAM. As such, POST may detect a system configuration change by comparing predetermined system configuration to the current system configuration. BIOS an POST more clearly defined in the IBM Personal System/2 and Personal Computer BIOS Interface Technical Reference 1991, which is hereby incorporated by reference herein.

### Unified Planar

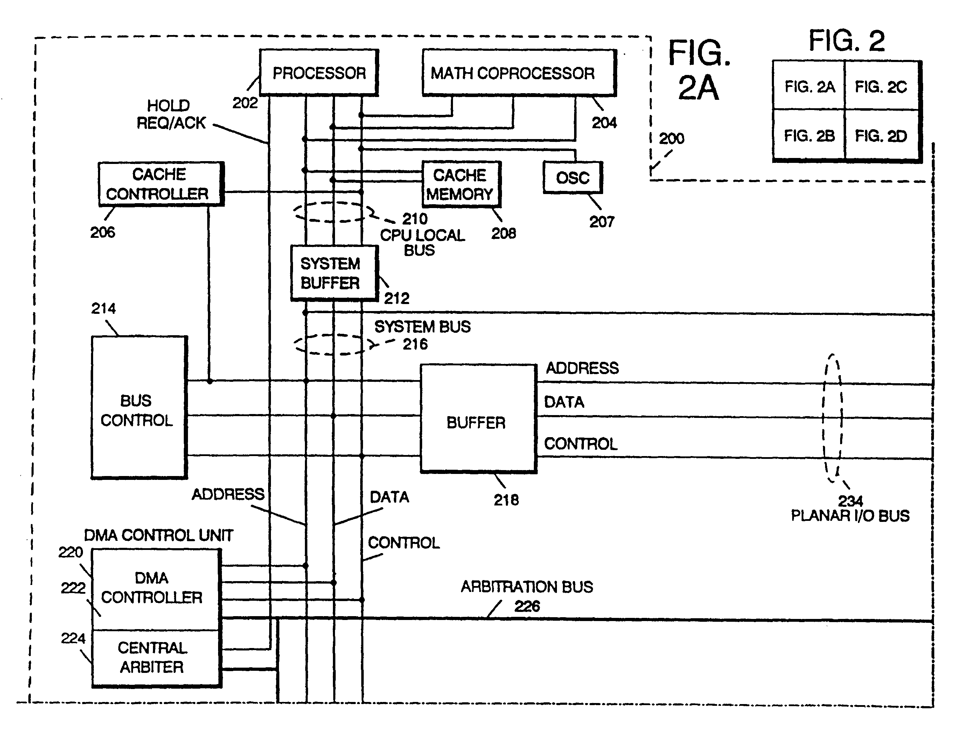

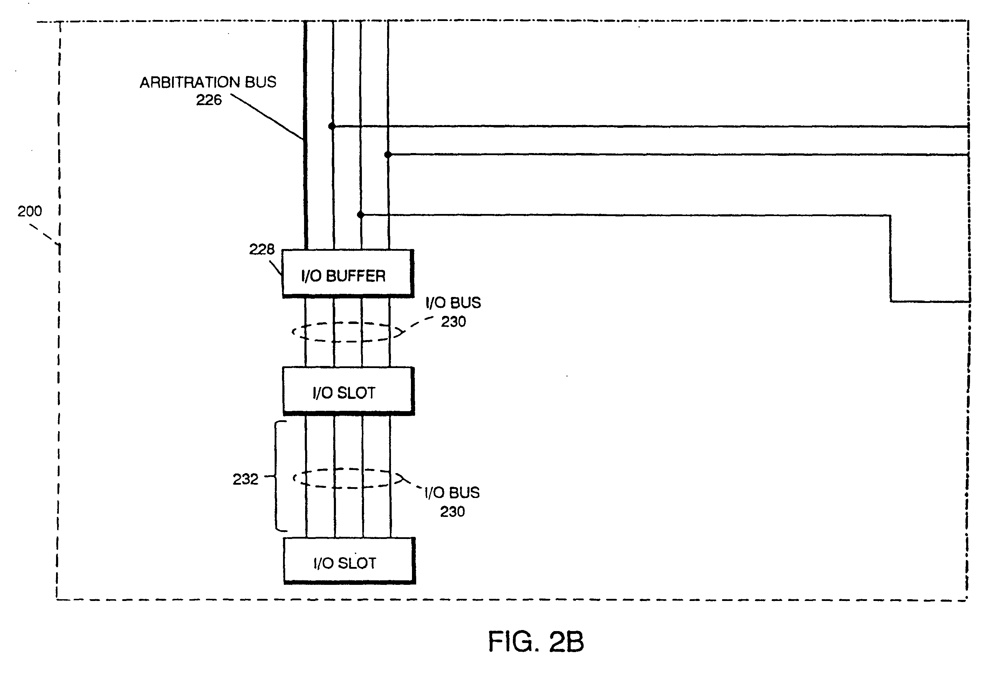

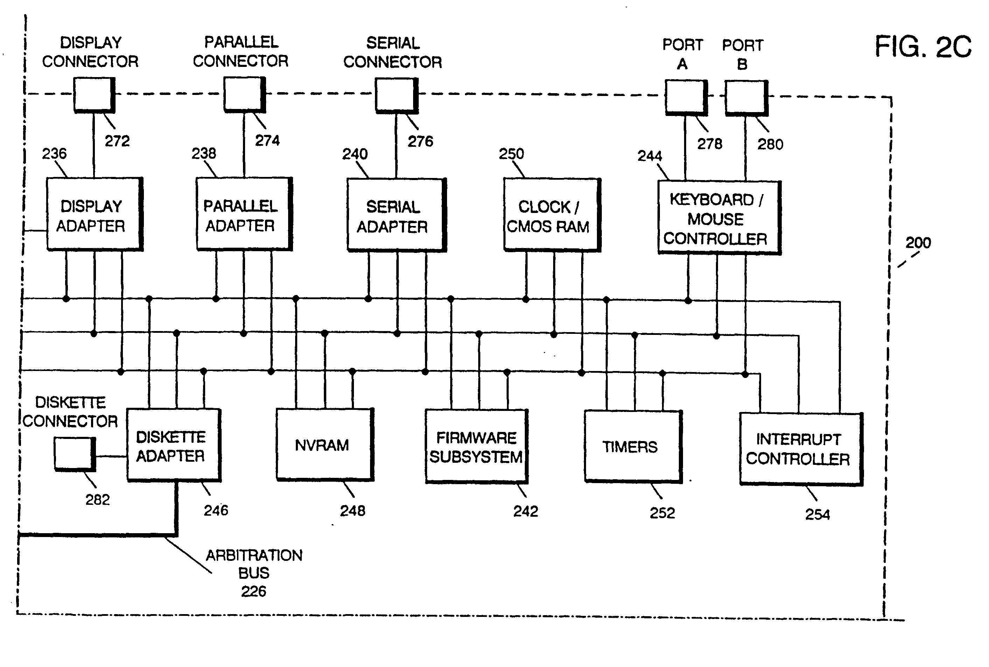

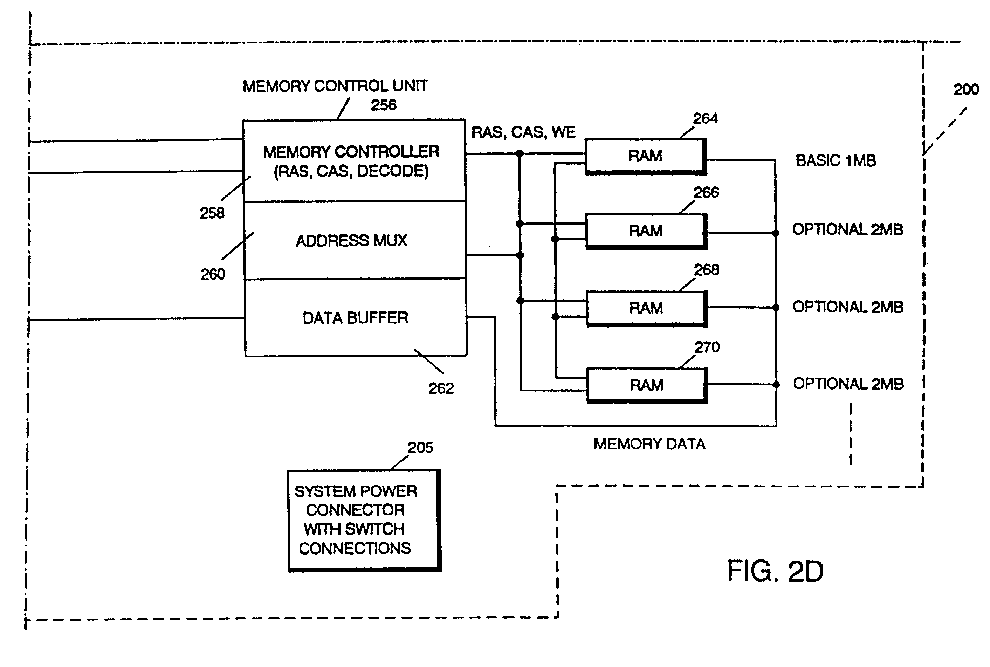

Referring to Fig. 2, there is shown a block diagram of a unified planar 200 of the information processing system 102 or 102B. The planar 200 includes a printed circuit board (PCB) 201 upon which are mounted or connected a number of input/output bus connectors 232 having I/O slots, a processor 202 which is connected by a high speed CPU local bus 210 under control of a bus control unit 214 to a memory control unit 256. The unit 256 is further connected to a main memory such as volatile random access memory (RAM) 264. Any appropriate processor 202 can be used such as an Intel 80386, Intel 80486 or the like. A system power connector 205 is mounted on the PCB 201 for connection to a power unit (not shown) that supplies the necessary power for the system 100.

The CPU local bus 210 (comprising address, data and control components) provides for the interconnection of the processor 202, an optional math coprocessor 204, an optional cache controller 206, and an optional cache memory 208. Also coupled onto the CPU local bus 210 is a system buffer 212. The system buffer 212 is itself connected to a system bus 216 which comprises address, data and control components. The system bus 216 extends between the system buffer 212 and an I/O buffer 228. The system bus 216 is further connected to the bus control unit 214 and to a direct memory access (DMA) control unit 220. The DMA control unit 220 includes a central arbiter 224 and a DMA controller 222. The I/O buffer 228 provides an interface between the system bus 216 and an I/O bus 230. An oscillator 207 is connected as shown for providing suitable clock signals to the computer system 100. Those skilled in the art will recognize that while the preferred embodiment is implemented on the MICRO CHANNEL bus of an IBM PS/2 computer system, which is well known in the art, alternative bus architectures could also be used to employ the invention.

Connected to the I/O bus 230 is a plurality of I/O bus connectors having slots 232 for receiving adapter cards which may be further connected to I/O devices or memory. Two I/O connectors 232 are shown for convenience, but additional I/O connectors may easily be added to suit the needs of a particular system. As shown, one of the I/O connectors is connected to a well known Token Ring communication adaptor card 231 which is used to provide network communication capability for the information processing system (102 or 102B). Upon start of a network communication, the CPU 202 activates the Token Ring adapter card 231 in a well known manner to allow inbound or outbound information to be communicated over the information handling network 150. As such, the communication adapter card 231 includes both transmitter means and receiver means for communicating information over the network 150. An arbitration bus 226 couples the DMA controller 222 and the central arbiter 224 to the I/O connectors 232 and a diskette adapter 246. Also connected to the system bus 216 is the memory control unit 256 which includes a memory controller 258, an address multiplexer 260, and a data buffer 262. The memory control unit 256 is further connected to the main memory such as the random access memory as represented by the RAM module 264. The memory control unit 256 includes logic for mapping addresses to and from the processor 202 to and from particular areas of the RAM 264. While the system 100 is shown with a basic one megabyte RAM module 264, it is understood that additional memory can be interconnected as represented in Fig. 2 by optional memory modules 266, 268, 270.

A buffer 218 is coupled between the system bus 216 and a planar I/O bus 234. The planar I/O bus 234 includes address, data, and control components. Coupled along the planar I/O bus 234 are a variety of I/O adapters and other peripheral components such as a display adapter 236 (which is used to drive the optional display 104), a clock/CMOS RAM 250, a nonvolatile RAM 248 (hereinafter referred to as NVRAM), a serial adapter 240 (other common terms used for "serial" are "synchronous" and "RS232") a parallel adapter 238, a plurality of timers 252, the diskette adapter 246, a keyboard/mouse controller 244, an interrupt controller 254, and a firmware subsystem 242. The firmware subsystem 242 typically includes a nonvolatile program store (e.g., ROM) which contains a portion of POST and BIOS programs known as stage I POST. As described later in detail, stage I POST is used for an initial and limited system testing an includes routines for loading a stage II POST which is also known as initial micro load (IML) image from an external storage device, such as the floppy drive 108 or the hardfile 106.

The clock/CMOS RAM 250 is used for time of day calculations. The NVRAM 248 is used to store system configuration. That is, the NVRAM 248 will contain values which describe the present configuration of the system 100. The NVRAM 248 contains information which describes, for example, adapter card initialization data, capacity of a fixed disk or a diskette, the amount of main memory, etc. Furthermore, these data are stored in NVRAM 248 whenever a configuration program is executed. This configuration program can be a conventional Set Configuration program provided on a system Reference Diskette included with IBM PS/2 computer systems. The Reference Diskette is sometimes referred to as a diagnostic, maintenance or service diskette. The purpose of the configuration program is to predetermine and pre-store values characterizing the configuration of this system 100 to NVRAM 248 which are saved when power is removed from the system. The NVRAM can be a low power CMOS memory with a battery backup.

Connected to the keyboard/mouse controller 244 are a port A 278 and a port B 280. These ports A,B are used to connect the keyboard 110 and the mouse 112 to the personal computer system 100. Coupled to the serial adapter 240 is a serial connector 276. An optional device such as a modem (not shown) can be coupled to the system through this connector 276. Coupled to the parallel adapter 238 is a parallel connector 274 to which a device such as the printer 114 can be connected. Connected to the diskette adapter 246 is a diskette connector 282 used to attach one or more diskette drives 108.

### Alternate Planar Board

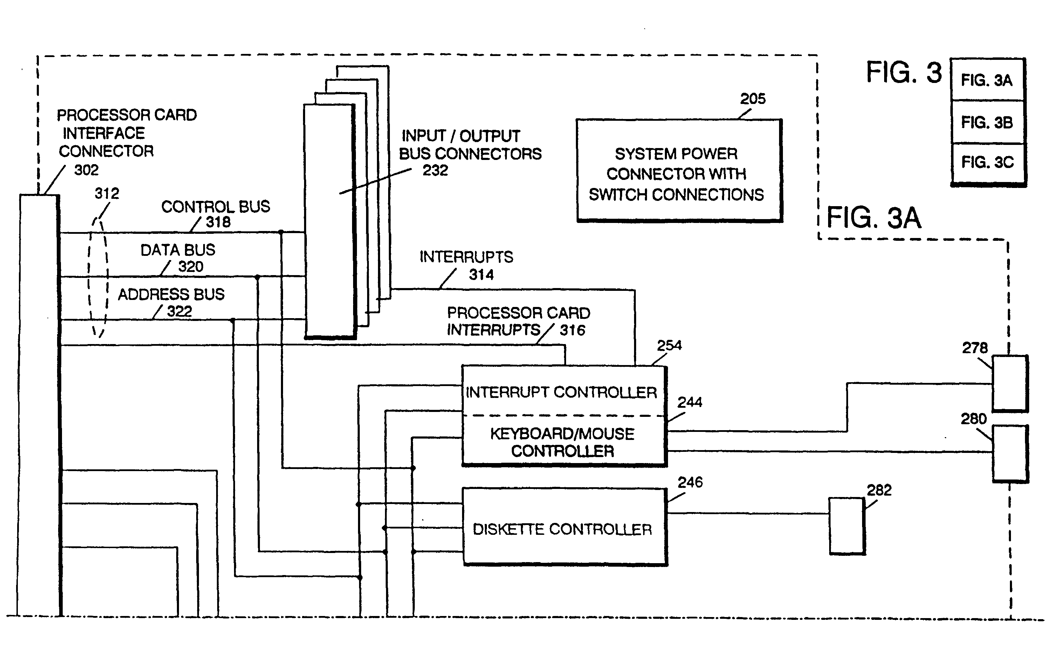

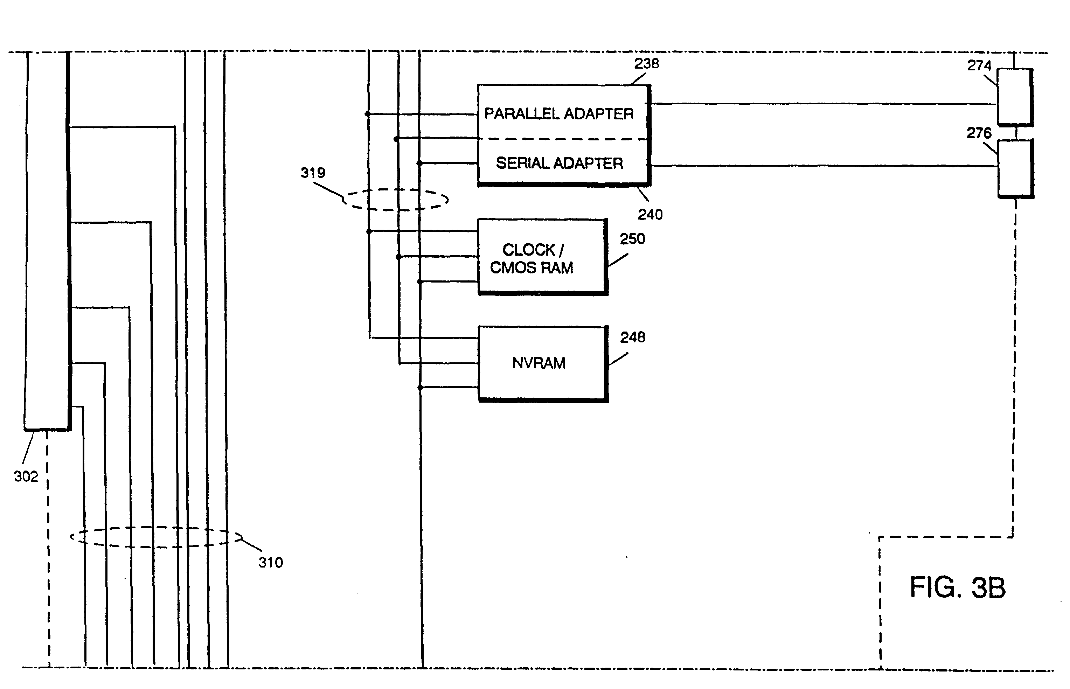

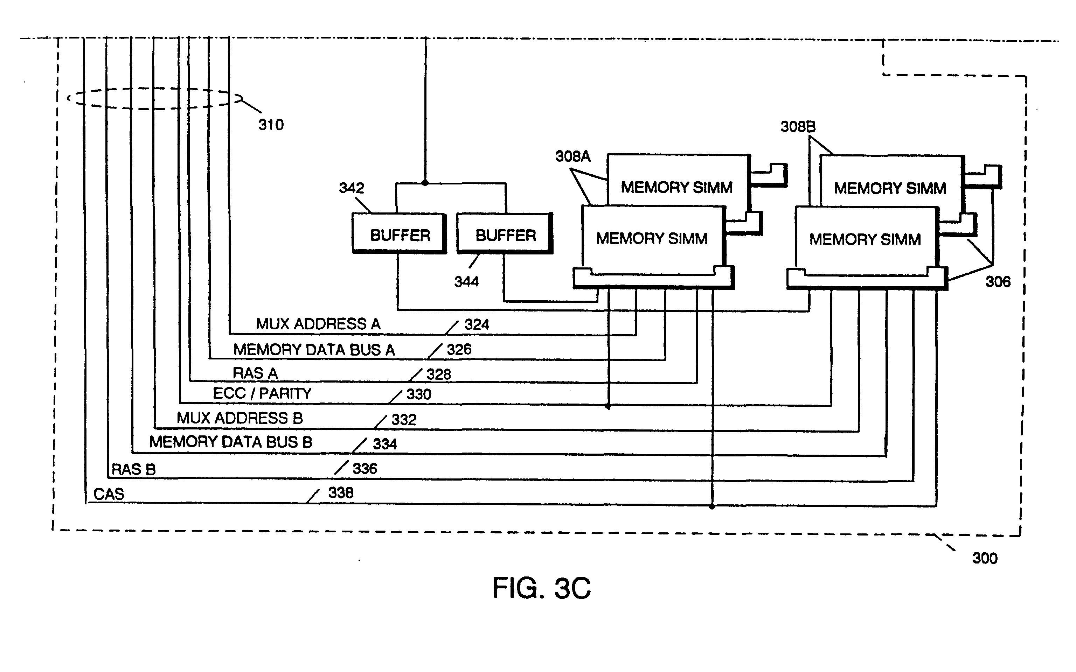

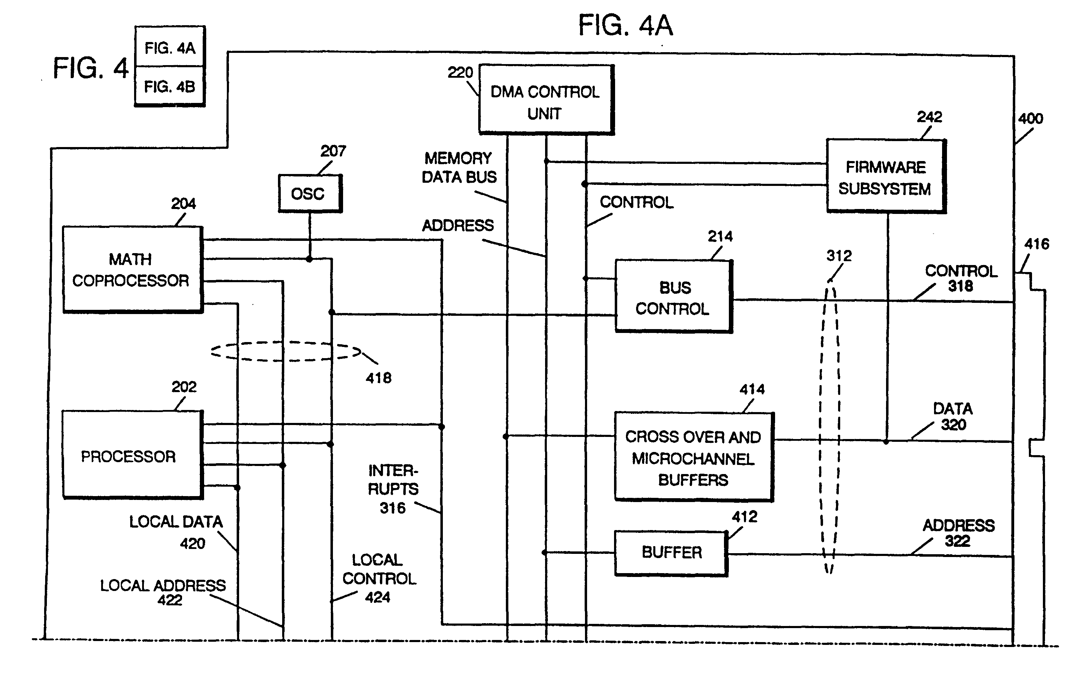

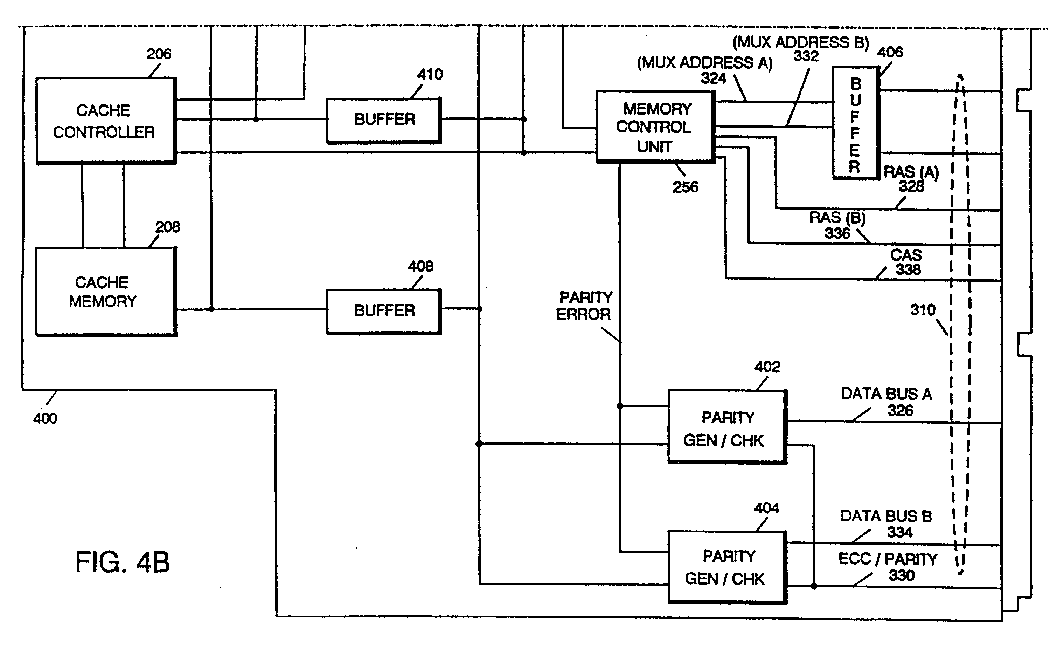

According to an alternative embodiment of the personal computer system 100, the unified planar 200 is replaced by a planar board 300 and a processor card 400 (Figs. 3 and 4). The processor card 400 is removably mounted on and is electrically connected to the planar board 300. Identical element numbers of Fig. 2 correspond to identical elements in Figs. 3 and 4. Referring now to Fig. 3, the planar board 300 comprises a printed circuit board (PCB) 301 upon which are mounted (e.g., surface mounted) various components that are interconnected by wiring or circuits in the PCB. Such components include a suitable commercially available electrical connector 302 into which an edge 416 of the processor card 400 is plugged for removably mounting and electrically connecting the processor card 400 to the planar board 300. A plurality of single in-line memory module (SIAM) connectors 306 is also mounted on the PCB 301 for connecting to memory banks 308A, 308B forming the system main memory or RAM. One or more I/O bus or expansion connectors 232 are also mounted on the PCB 301 for connection to different expansion adapters and options that may be added or incorporated into the personal computer system 100. For example, the fixed disk drive 106 is connected to an adapter card 231 which has a small computer system interface (SCSI) disk controller. The adapter card 231 is connected to a I/O bus or expansion connectors 232. Preferably, each connector 232 is a commercially available connector of the type conforming to the above-mentioned MICRO CHANNEL architecture.

Also mounted on the planar board 300 are an interrupt controller 254 and a keyboard/mouse controller 244 which are connected to keyboard and mouse connectors 278, 280, a diskette controller or adapter 246 connected to a diskette connector 282, and serial and parallel adapters 240, 238 connected to serial and parallel connectors 276, 274 which allow the various I/O devices to be connected into the system. A system power connector 205 is mounted on the PCB 301 for connection to a power unit (not shown) that supplies the necessary power for the system. A nonvolatile memory (NVRAM) 248 and a time-of-day clock/CMOS RAM 250 are also mounted on the PCB 301. The PCB 301 also has mounted thereon various oscillators (not shown) to provide timing signals, and buffers 342, 344 (not all shown) to isolate sections of the circuitry in a manner well known.

The wiring of PCB 301 interconnects the various components as shown in the drawing and is grouped into three groupings, a memory bus 310 (including lines 324-338), a channel bus 312 (including an address bus 322, a data bus 320 and a control bus 318), and miscellaneous signal lines including interrupt lines 314, 316, all of which are connected to counterpart wiring on the PCB 401 through the connectors 302, 416. Tapped off the bus 312 is a planar function bus 319.

### Processor Card

Referring to Fig. 4, there is shown the processor card 400 for removably mounting on the planar board 300. The processor card 400 comprises a printed circuit board (PCB) 401 having mounted (e.g., surface mounted) thereon a plurality of commercially available components including a processor 202, an optional math coprocessor 204, an optional cache controller 206, an optional cache memory 208, a direct memory access (DMA) control unit 220, a bus control unit 214, a memory control unit 256, a firmware subsystem 242, and parity checking units 402, 404. The processor 202 preferably is a high performance type, such as an Intel 80486, having thirty-two bit data paths and providing thirty-two bit addressing capability. Of course, Intel 80386 and the like processors can be used. The remaining components are selected in conventional fashion for their compatibility with such processor. A plurality of buffers 406, 408, 410, 412, 414 is connected as shown. The buffers provide selective isolation or connection between the circuits allowing different portions to be used concurrently, for example, to move data between the processor 202 and the cache memory 208 while other data is being transferred between an I/O unit and the main memory 308A, 308B. All of the above components are electrically connected to each other as appropriate by printed wiring circuits in PCB 401 which terminate at the edge connector 416. The edge connector 416 is pluggable into the edge connector 302 on the planar board 300 shown in Fig. 3 so that the planar board 300 and the processor card 400 are electrically and mechanically interconnectable. As such, various versions of the processor card 400 each having a processor type associated with it may be plugged into the planar board 300.

The wiring circuits of the PCB 401 include a local bus 418 including data, address and control lines 420, 422, 424, respectively, which interconnect the processor 202 with an optional math coprocessor 204, an optional cache controller 206 and an optional cache memory 208, as shown in Fig. 4. The remaining circuit lines generally include interrupt lines 316, channel bus lines 312 and memory bus lines 310. The channel bus lines 312 include control, data and address bus lines 318, 320, 322, respectively. Memory bus lines 310 include multiplexed memory address lines 324, 332, row address strobe (RAS) lines 328, 336 for memory banks 308A, 308B, column address strobe (CAS) line 338, data bus A and B lines 326 and 334, and a line 330 for use in error checking via parity check or ECC checking. An oscillator 207 is connected as shown for providing suitable clock signals to the computer system 100. For simplicity, certain miscellaneous lines, such as reset, grounds, power-on, etc. have been omitted from Figs. 2, 3 and 4.

During normal operation of a personal computer system 100 having a board 300 and a card 400, the card 400 is electrically and mechanically connected to the board 300 and typically lies in a plane oriented substantially perpendicularly to the board 400.

To reiterate, the system firmware includes the Power-On Self Test program (POST) and the Basic Input Output System program (BIOS). BIOS further includes the compatibility BIOS or CBIOS and advanced BIOS or ABIOS. POST is the set of instructions which execute when the system is first powered-on. The execution of POST is critical to the initialization of the personal computer system 100 when the current system configuration is determined. BIOS is the set of instructions which facilitates the transfer of data and control instructions between the processor 202 and I/O devices.

In case the information processing system (e.g., 102B) are medialess (have no DASD or floppy drive), a Remote Initial Program Load (RIPL) is performed via the communication adapter card 231. The card is connected, for example, to one of the connectors 232 and permits booting an operating system from a network server 102 in a well known manner.

POST contains a bootstrap program which attempts to locate a boot device and load a boot record. Typically, the boot device is hardfile 106 or diskette drive 108 or in case of a media less client the boot device is the server 120. Diskette drive 108 requires a boot or operating system diskette (media, not shown) to operate. If POST is successful in loading a boot record from a boot device, then POST transfers control to the boot record completing the operation of the POST bootstrap program. If a boot record was unable to be loaded and a RPL adapter is present, then POST transfers control to the RPL program. If no RPL program is present, then POST prompts the user indicating that a boot source is required. CBIOS is essential to the bootstrap operation of the computer. CBIOS provides a number of services including access to the hardfile 106 and diskette drive 108.

The information handling system 102, and 102B execute a two stage POST known as initial micro code load (IML) as is well known and is fully described in the US patent number 5,128,995 which is hereby incorporated by reference. According to IML the processor during a stage I POST loads the contents of the firmware subsystem 242 and executes its commands which comprise minimal checking of certain I/O devices, such as display device and certain memory device addresses. Thereafter, during a stage II POST the processor completes the system testing using an IML image. The IML image includes the instructions for completing POST and for turning over processor control to the operating system. During the POST the current system configuration is determined and compared to the pre-determined and pre-stored system configuration information in the NVRAM 248. The IML image is specific to the system processor and is stored in a system partition of the storage device. If the storage device is a diskette in the floppy drive 108 the system partition occupies a portion of the diskette. The IML image stored on the system partition comprises a portion of POST as well as a reference image which contains routines for setting up and/or diagnosing the system hardware. The reference image is loaded and executed when POST detects an error resulting from a configuration change. The reference image may also be loaded in response to a predefined key sequence. If the storage device is the hardfile 106, the system partition is stored at a protected portion of the storage medium in order to avoid inadvertent corruption of the vital IML images. In IBM's model 90 and 95 the protected system partition is stored at the very last portion of the storage medium and occupies a 3 megabyte storage capacity.

According to the present invention the information processing systems 102 and 102B of the information handling network 150 upon detecting a change in system configuration during the IML period activate the communication adaptor card 231 to broadcast certain system configuration information over the network prior to loading the operating system.

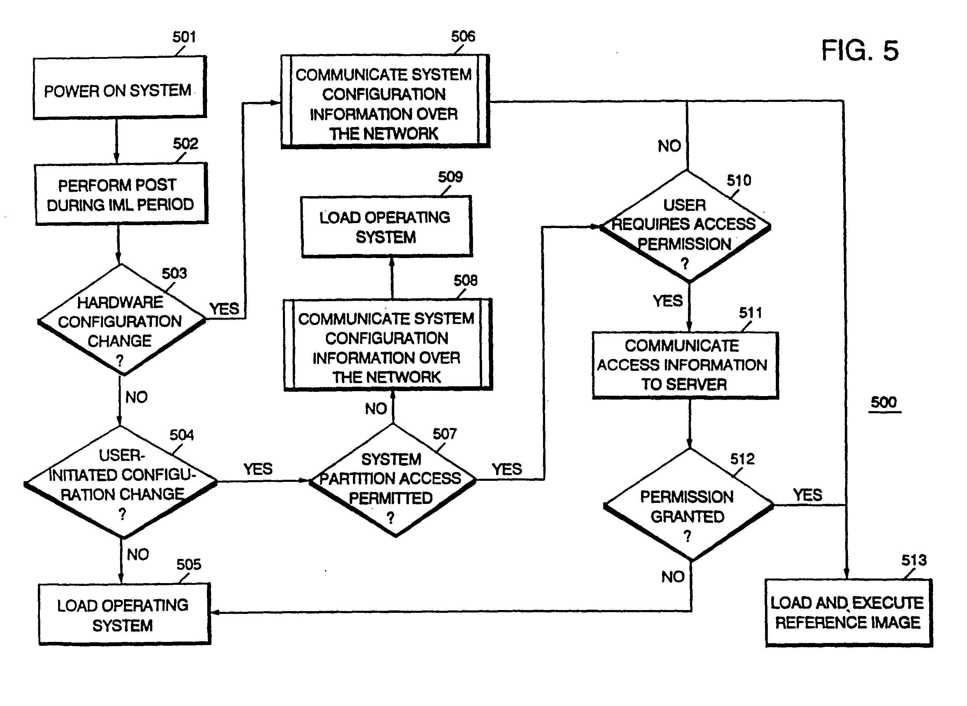

Referring to FIG. 5, the operational steps taken for achieving the purpose of the present invention are illustrated by flow chart 500. When the system is powered on, block 501, the information processing system performs POST during the IML period, block 502. The processing system then determines whether the system configuration change is attempted. The change in system configuration may occur by changing hardware configuration, such as increasing or decreasing system memory. Alternatively, the configuration change may be user prompted when the user may request a system configuration change by executing the predefined key stroke sequence. First, the information processing systems, determines whether there has been a hardware configuration change during the IML period through POST, block 503. Such determination is made by comparing the current system configuration with the predetermined system configuration stored in the NVRAM 248. If not, a determination is made as to whether a user initiated configuration change is made, block 504. This determination is made by detecting execution of predefined key sequence by the user in a well known manner. If not, the operating system is loaded, block 505.

However, if POST determines that the hardware configuration of the system is changed, certain system configuration information are collected and communicated over the network prior to loading the operating system, block 506. The system configuration information may include, among other things, error code for one or more of the adapter cards failures, NVRAM, CMOS, and BIOS data area, etc. Thereafter, the reference image is loaded from the system partition and executed to store the current system configuration in the NVRAM 248.

If POST determines that a user initiated system configuration change is attempted, a determination is made as to whether system partition access is permitted, block 507. If not, the system configuration information is collected and communicated over the network, block 508, and subsequently the operating system is loaded, block 509. If, however, system partition access is allowed, a determination is made as to either such access requires authorization from an administrator information processing system, such as the server 102, block 510. If no, the reference image is loaded and executed to allow the user change system configuration. If system partition access require authorization, a system configuration information change request including identification of the system configuration of which is to be changed is communicated to the server 120 through the network communication adapter card 231, block 511. If the server 120 allows permission to access the system partition the reference image is loaded and executed, blocks 512 and 513. If server 102 does not grant permission, the operating system is loaded, blocks 512 and 505.

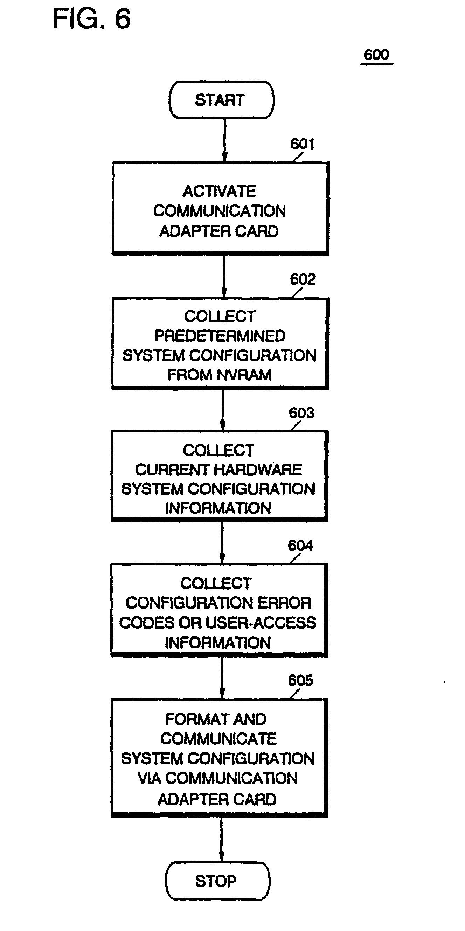

Referring to Fig. 6, a more detailed flow chart 600 of the steps taken during block 506 and 508 are shown. Upon detection of system configuration change (either hardware change or user initiated configuration change), the network communication adapter card 231 is activated, block 601. The information processing system then loads a driver for collecting the predetermined system configuration from the NVRAM 248, block 602. The driver then collects the current hardware configuration of the system from the various devices, block 603. Then error related information, i.e, the error code of the hardware configuration change or the user access request information are collected, block 604. All of the collected information from the preceding steps are then formatted and communicated over through the communication adapter card 231 over the network.

The communicated system configuration information is received by the administrator processor system (e.g. the server 102) through the communication adapter card 231. The administrator system includes a monitoring means, preferably in a software routine form, for monitoring the communications on the network 150. Upon detecting the system configuration information, the administrator receives the information and logs it in a permanent storage medium, such as the DASD. The stored information are preferably formatted and time stamped for further processing.

Each information processing system within the system may have the capability of receiving the system configuration information communicated according to the present invention. The information so received by the network systems informs them of the capabilities of the other systems within the network and as such may adapt their hardware to take full advantage of the networks capabilities.

As can be appreciated the present invention offers system configuration information communication capability prior to loading the operating system or any other application software. Thus, making this valuable networking feature available to information handling networks having information processing systems which employ off the shelf operating systems, such as the IBM compatible personal computers. Furthermore, the present invention allows the system configuration information be communicated when necessary upon start up and prior to loading the operating system thus, receiving the processor from performing real time configuration monitoring tasks.

### Software Environment

### Overview - Object Oriented Technology

The present invention can be implemented using Object Oriented (00) framework technology. Individuals skilled in the art of 00 framework technology may wish to proceed to following portions of the Description section of this specification. However, those individuals who are new to framework technology, or new to 00 technology in general, should read this overview section in order to best understand the benefits and advantages of the present invention.

### Object Oriented Technology v. Procedural Technology

Though the present invention relates to a particular 00 technology, the reader must first understand that, in general, 00 technology is significantly different than conventional, process-based technology (often called procedural technology). While both technologies can be used to solve the same problem, the ultimate solutions to the problem are always quite different. This difference stems from the fact that the design focus of procedural technology is wholly different than that of 00 technology. The focus of process-based design is on the overall process that solves the problem; whereas, the focus of 00 design is on how the problem can be broken down into a set of autonomous entities that can work together to provide a solution. The autonomous entities of 00 technology are called objects. Said another way, 00 technology is significantly different from procedural technology because problems are broken down into sets of cooperating objects instead of into hierarchies of nested computer programs or procedures.

### The Term "Framework"

There has been an evolution of terms and phrases which have particular meaning to those skilled in the art of 00 design. However, the reader should note that one of loosest definitions in the 00 art is the definition of the word "framework". The word framework means different things to different people. Therefore, when comparing the characteristics of two supposed framework mechanisms, the reader should take care to ensure that the comparison is indeed "apples to apples." As will become more clear, the term framework is used in this specification to describe an 00 mechanism that has been designed to have core function and extensible function. The core function is that part of the framework mechanism that is not subject to modification by the framework purchaser. The extensible function, on the other hand, is that part of the framework mechanism that has been explicitly designed to be customized and extended by the framework purchaser.

### 00 Framework Mechanisms

While in general terms an 00 framework mechanism can be properly characterized as an 00 solution, there is nevertheless a fundamental difference between a framework mechanism and a basic 00 solution. The difference is that framework mechanisms are designed in a way that permits and promotes customization and extension of certain aspects of the solution. In other words, framework mechanisms amount to more than just a solution to the problem. The mechanisms provide a living solution that can be customized and extended to address individualized requirements that change over time. Of course, the customization/extension quality of framework mechanisms is extremely valuable to purchasers (referred to herein as framework consumers) because the cost of customizing or extending a framework is much less than the cost of a replacing or reworking an existing solution.

Therefore, when framework designers set out to solve a particular problem, they do more than merely design individual objects and how those objects interrelate. They also design the core function of the framework (i.e., that part of the framework that is not to be subject to potential customization and extension by the framework consumer) and the extensible function of the framework (i.e., that part of the framework that is to be subject to potential customization and extension). In the end, the ultimate worth of a framework mechanism rests not only on the quality of the object design, but also on the design choices involving which aspects of the framework represent core function and which aspects represent extensible function.

### ZAF - An Illustrative Framework Mechanism

while those skilled in the art appreciate that framework design is necessarily an intertwined and iterative process, example design choices for a simplistic framework mechanism are set forth in the paragraphs that follow. It should be understood, though, that this is only an example framework that is being used in this specification to illustrate and best explain framework mechanisms such that the reader can understand and appreciate the benefits and advantages of the present invention.

Framework designers determine what objects are needed for a framework mechanism by selecting objects from what is called the *problem domain.* The problem domain is an abstract view of the specific problem at hand. The example problem domain chosen for this illustrative framework mechanism is that of zoo administration. The specific problem is that of designing a mechanism that assists zoo keepers in the care and feeding of zoo animals. In our example of a Zoo Administration Framework (ZAF), an 00 framework designer would look to the zoological problem domain and decide that any ZAF would of necessity involve a mechanism that represented the relationship between zoo keepers and animals (i.e., to represent how zoo keepers care for animals). The framework designer would also likely recognize that zoo animals usually live in cages, pens, tanks, and other sorts of containment units. Therefore, our framework designer would start with the idea that the framework would have to involve mechanisms that represented all of these fundamental entities and relationships.

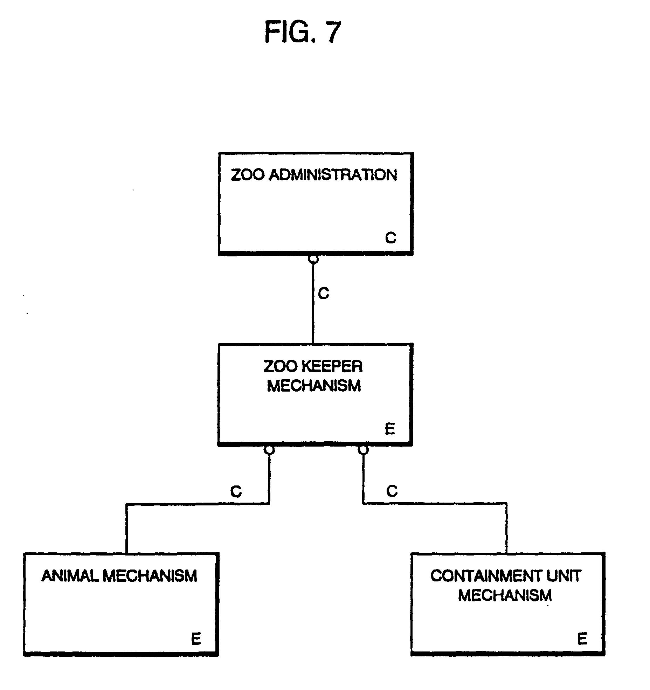

To begin the design process, our framework designer would likely begin with what is called a *category diagram*. Category diagrams are used to describe high level framework mechanisms, and how those mechanisms relate to one another. Figure 7 is a category diagram for the example framework ZAF. Each mechanism in a category diagram represents groupings of objects that perform a particular function. For the purposes of illustration, assume that our framework designer decides that ZAF should be made up of four high level mechanisms: a zoo administration mechanism, a zoo keeper mechanism, an animal mechanism, and a containment unit mechanism.

As shown in Figure 7, the zoo administration mechanism has been designed to use the zoo keeper mechanism to administer the zoo. The zoo administration mechanism is therefore said to, have a *using* relationship with the zoo keeper mechanism.

As discussed, the zoo administration mechanism has been designed to have responsibility for over-all control of ZAF. Accordingly, the zoo administration mechanism is responsible for scheduling the operation of the zoo keeper mechanism. Note also that our framework designer designed the zoo administration mechanism to be a core function of ZAF, which means that it has been designed such that it will not be subject to potential customization and extension. The C in the category box denotes this fact. Please note further that the uses relationship between the zoo administration mechanism and the zoo keeper mechanism has also been designed such that it is not available for ultimate customization by the framework consumer.

The zoo keeper mechanism has been designed to be generally responsible for the care and feeding of the zoo animals. Accordingly, it uses the animal and containment unit mechanisms to perform its tasks. However, unlike the design of the zoo administration mechanism our framework designer has designed the zoo keeper mechanism to be extensible function, which again means that the zoo keeper mechanism has been designed to be available for modification and/or extension by the framework consumer to address future care and feeding requirements. This fact is denoted by the E in the zoo keeper mechanism category box.

Our framework designer has designed the animal mechanism to represent the animal side of the interaction between zoo animals and zoo keepers. Since the animal population in the zoo is something that changes on a regular basis, the animal mechanism has similarly been designed as an extensible function. The containment unit mechanism interacts with the zoo keeper mechanism by representing individual containment units such as pens, tanks, and cages. Like the animal mechanism, the containment unit mechanism has been designed as an extensible function such that it can handle future customization and extension requirements. Please note here, however, that even though the zoo keeper, zoo animal, and containment unit mechanisms have all been designed as extensible function, the relationships between the mechanisms have been designed to be a core function of ZAF. In other words, even though it is desirable to give ZAF's consumers flexibility relative to the zoo keeper, zoo animal, and containment unit mechanisms, it is not desirable to allow ZAF's consumers to change how these mechanisms relate to one another.

Our framework designer would next design the classes and relationships that make up the mechanisms shown on Figure 7. A class is a definition of a set of like objects. As such, a class can be thought of as an abstraction of the objects or as a definition of a type of object. From the view of a computer system, a single object represents an encapsulated set of data and the operation or a group of operations that are performed by a computer system upon that data. In fact, in a secure computer system, the only access to the information controlled by an object is via the object itself. This is why the information contained in an object is said to be *encapsulated* by the object.

Each class definition comprises data definitions that define the information controlled by the object and operation definitions that define the operation or operations performed by objects on the data that each object controls. In other words, a class definition defines how an object acts and reacts to other objects by defining an operation or set of operations that is/are performed on the defined data. (Please note that operations are sometimes called *methods, method programs, and*/*or* *member_ functions.)* When taken together, the defined operation(s) and data are said to be the behaviour of the object. In essence, then, a class definition defines the *behaviour* of its member object or objects.

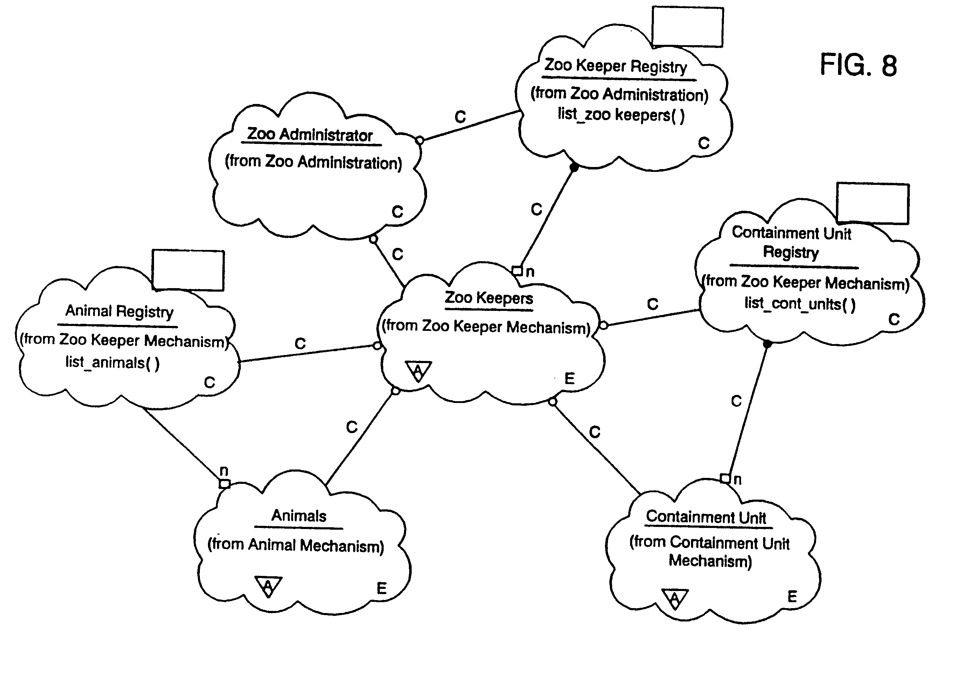

Figure 8 is an 00 class diagram that shows the fundamental classes that our framework designer has designed for ZAF. Each class representation includes its relationship to the mechanisms shown on Figure 7. For example, we can see that the zoo keepers class is denoted as being from *Zoo Keeper Mechanism.* The fundamental classes of ZAF include: the zoo administrator class, which is part of the zoo administration mechanism; the zoo keeper registry class, which is also part of the zoo administration mechanism; the animal registry class, which is part of the zoo keeper mechanism; the zoo keepers class, which is also part of the zoo keeper mechanism; the containment unit registry class, which is also part of the zoo keeper mechanism; the animals class, which is part of the animal mechanism; and the containment unit class, which is part of the containment unit mechanism.

Please note again that the relationships between the classes have been designed as core function of ZAF such that they are not available for ultimate modification by ZAF's consumers.

The zoo administrator class is the definition of the object that is responsible for the overall control of ZAF. Again, 00 classes all define the objects that interact to provide a solution to the problem. However, it is by exploring the characteristics of the class definitions that we are able to understand how the objects of the framework mechanism have been designed to provide a living solution that can be customized and/or extended to address future requirements.

The zoo administration class has been designed to have a uses relationship with the zoo keeper registry. Our framework designer has designed the zoo administration and zoo registry classes to be a core function of ZAF because our designer has decided that ZAF's consumers should not be allowed to modify the behaviour of objects that are members of these class definitions. The zoo keeper registry, which has what is called a *contains by reference relationship* with the zoo keeper class, is simply a class that defines an object that is a container for all zoo keeper objects. Accordingly, the zoo keeper registry includes a definition for a list_zoo_keepers() operation. As will be described later, this operation is responsible for providing a list of zoo keeper objects to other objects that request such a list.

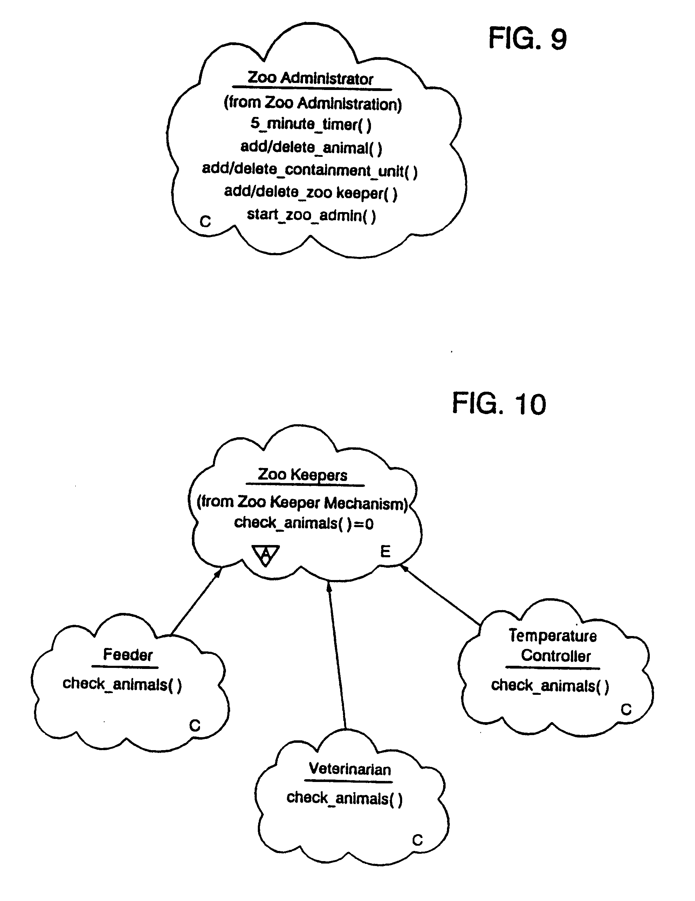

Figure 9 shows a lower level view of the zoo administrator class. Since objects of type zoo administrator have responsibility for overall control of ZAF, the zoo administrator class has been designed to include operations that perform tasks oriented towards zoo administration. The class definition includes the following five operations: 5_minute_timer(), add_animal(), add_containment_unit(), add_zoo_keeper(), and start_ zoo_admin().

The start zoo_admin() operation is responsible for starting ZAF. That is, a user or system administrator will interact with the start_zoo_admin() operation to begin administration of a zoo via ZAF. Once started, our framework designer has designed the start_zoo_admin() operation to initiate the 5_minute_timer() operation. Every five minutes, the 5_minute_timer () operation instructs the zoo keeper objects to go out and check on the animals. The add/delete_zoo_keeper operation is responsible for interacting with users of ZAF to define additional zoo keepers (i.e., additional zoo keeper classes), to add additional zoo keepers (i.e., zoo keeper objects), and to remove zoo keeper classes and/or objects. As will become clear, each zoo keeper object is responsible for performing a particular zoo task. Therefore, it is natural that a user of ZAF might well want to add a zoo keeper definition and object to handle an additional zoo task or to remove a definition or object that is no longer needed. As will be seen, this flexibility is provided by designing the zoo keeper mechanism as an extensible function.

Like the add/delete_zoo_keeper operation, the add/delete_animal() operation is responsible for interacting with users to define additional zoo animal classes and objects and to remove classes and objects that are no longer needed. Again, it is quite natural for a zoo to need to add and remove animals. The add/delete_containment_unit() operation is responsible for the definition of new containment unit classes and objects and for removal of classes and/or objects that are no longer necessary. Again, our framework designer has designed ZAF in a way that provides this flexibility by designing the animal and containment unit mechanisms as an extensible functions.

Referring back to Figure 8, the zoo keepers class definition has a uses relationship with the animal registry, animals, containment unit registry, and containment units classes. Since the value of ZAF is enhanced by allowing ZAF's consumers to customize and extend the zoo keepers, animals, and containment unit classes, these classes have been designed as extensible function. However, changing the behaviour of the animal and containment unit registry classes would disrupt the basic operation of ZAF. Therefore, these classes have been designed to be core functions of ZAF.

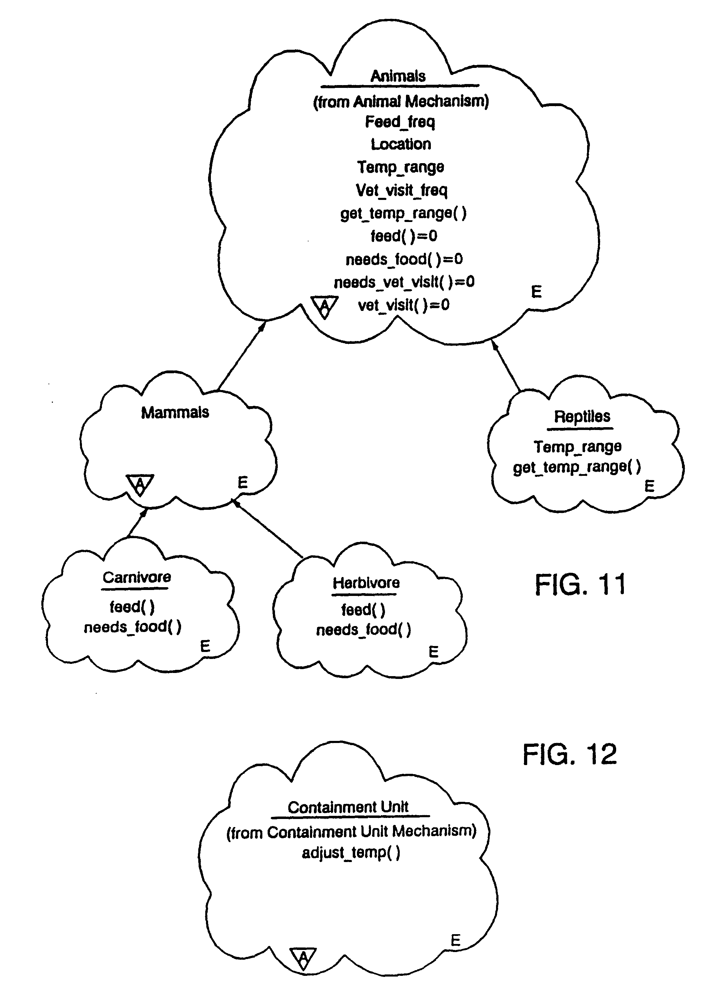

Figure 10 is a class diagram of the zoo keeper class. However, before describing the details of Figure 10, it is worthwhile to point out that the class definitions shown on Figure 10 are ranked in a very simple ordering called a *class hierarchy*. A class, like the zoo keeper class, that represents the most generalized/abstract class in a class hierarchy is referred to as the *base class* of the hierarchy. The ordering of classes in a class hierarchy goes from most general to least general (i.e., from general to specific). Less general classes (e.g., the feeder class) are said to *inherit* characteristics from the more general class or classes, (i.e., the zoo keeper class in this case). As such, class definitions feeder, veterinarian, and temperature controller are said to be *subclasses* of the zoo keeper class. Inheritance mechanisms will be explored in more detail in the discussion associated with Figure 11.

As shown on Figure 10, the zoo keeper class definition contains a single operation definition, the check_animals() operation definition. The reader should also note that the zoo keepers class definition is marked as being an *abstract class.* Abstract classes are not designed to have objects created as their members, but are instead used to define a common interface/protocol for their subclasses. A class is said to be an abstract class when at least one of its operation definitions is a *pure virtual* operation definition. Pure virtual operation definitions are designed for the sole purpose of defining a common interface for subclass definition of that operation. In other words, the design of the actual behaviour (i.e., the data and operations) is left to the subclasses themselves. In the case of the zoo keeper class definition, the feeder, veterinarian, and temperature controller subclasses define specific implementations of the pure virtual check_animals() operation definition that is contained in the zoo keeper class. An operation is marked as a pure virtual when it is set equal to O.

It is important to note, though, that the common interface of a pure virtual operation definition must be honoured by all subclasses such that requesting objects (called *client objects)* can use subclass member objects (called *server objects)* without needing to know the particular subclass of the server object. For example, whenever the object defined by the zoo administrator class needs a particular action performed, it interacts with a zoo keeper object. Because the interface to these objects was defined in abstract, base class zoo keeper and preserved in the subclass definitions for the check_animals() operation, the zoo administrator object need not have special knowledge about the subclasses of any of the server objects. This has the effect of decoupling the need for the action (i.e., on the part of the zoo administrator object) from the way in which the action is carried out (i.e., by one of the objects of the zoo keepers subclasses). Designs (like the ZAF design) that take advantage of the characteristics of abstract classes are said to be *polymorphic.*

Polymorphism is extremely important to 00 framework design because it allows the way in which something is done (called the implementation) to be changed or extended without effecting the mechanisms that depend on the fact the action is actually performed. In other words, client objects need only understand that certain objects perform certain functions, not how those functions are actually carried out. This is one way in which a properly designed framework can be readily customized and extended to satisfy future requirements.

As previously discussed, our framework designer has designed ZAF such that zoo keeper objects interact with animal and containment unit objects to perform their tasks. Figure 11 is a class diagram for the class hierarchy of the abstract class animal. Since the animals class definition is responsible for representing the characteristics and behaviour of zoo animals, the framework designer has designed abstract class animal in a way that reflects this responsibility. As shown, the example animal class definition includes data definitions feed_freq, location, and temp_range and operation definitions get_temp_range(), feed(), needs_food(), needs_vet_visit(), and vet_visit().

For the purposes of this framework overview, it is not necessary to explore each definition in detail. However, the temp_range data definition and the get_temp_range() and feed() operation definitions are good examples of well thought out framework design choices.

The feed() operation definition is designed to perform the actual feeding of the animals (i.e., through specific feeding apparatus which is not shown). The feed() operation is a pure virtual operation. Again, this means that the design of the class is such that the actual mechanism that performs the needed function has been left to be defined by the subclasses. Requiring subclass definition is a good design choice in cases like this where objects that are created as members of the subclasses have particularized needs. In ZAF, for example, each type of animal is likely to have need for a particularized feeding apparatus, which not only makes definition of a generic feed() operation difficult, but valueless.

By way of comparison, the framework designer has explicitly designed the get_temp_range() operation such that it is not a pure virtual operation definition. This means that get_temp_range() has been generically defined as a default operation. As such, it is considered a *virtual operation*. Default operations are used to provide generic function to subclasses. The subclasses can simply use the default operations or they can customize or extend the default operations by redefinition. Redefinition of a default operation is called *overriding* the default operation.

Mammals is a subclass of class animals, and as such, mammals inherits all of the characteristics of class animals. Please note that class mammals is also designed as an abstract class, which again means that it has not been designed to have objects created as its members, but has instead been designed to provide a common interface for its subclasses. Subclass mammal is further subclassed into classes carnivore and herbivore.

Since definition of the feed() operation has been left up to the subclasses, subclasses carnivore and herbivore each have their own definition of the feed() operation. Again, this is a good design choice because meat eating carnivores are going to have different needs than their plant eating counterparts.

Temp_range is a data definition for the range of temperatures that coincides with that of the specific animal's natural habitat and the get_temp_range() operation definition is designed to retrieve the temp_range for a specific animal and return it to a requesting client object. Subclass reptiles contains its own data definition for temp_range and its own definition for the get temp_range() operation. ZAF has been designed this way to point out that data definitions can be overridden just like operation definitions. Since many reptiles live in desert conditions, where nights can be very cold and days very hot, the default temp_range definition has been overridden in the reptiles class to include time and temperature information (not explicitly shown on Figure 11). This is another good design choice because it allows ZAF to treat reptile containment units differently than other containment units by allowing temperature adjustments to be made based on the time of day as well as on the current temperature of the containment unit itself.

Figure 12 is a class diagram showing a lower level view of the containment unit class. The containment unit class contains virtual operation definition adjust_temp(). The adjust_temp() definition defines both the interface and mechanism used to actually adjust the temperature in the containment units of the zoo (i.e., via heating and cooling mechanisms which are not shown).

### How the ZAF Objects Interact

Beyond designing the objects that make up the solution to the specific problem, our framework designer must also design how the individual objects interrelate. In other words, the objects must interrelate in way that takes advantage of the manner in which they were designed. As discussed, the way in which the defined operations of an object operate on the data defined for the object is called the object's behaviour. While objects may be characterized as autonomous entities, it is still very important that each object exhibit a consistent behaviour when interrelating with other objects. Consistent behaviour is important because objects depend upon the consistent behaviour of other objects so that they themselves can exhibit consistent behaviour. In fact, consistent behaviour is so important that an object's behaviour is often referred to as the *contract* the object has with the other objects. When an object does not exhibit a consistent behaviour, it is said to have violated its contract with the other objects.

When an operation of one object needs access to the data controlled by a second object, it is considered to be a client of the second object. To access the data controlled by the second object, one of the operations of the client will call or invoke one of the operations of the second object to gain access to the data controlled by that object. One of the operations of the called object (i.e., a server operation in this case) is then executed to access and/or manipulate the data controlled by the called object.

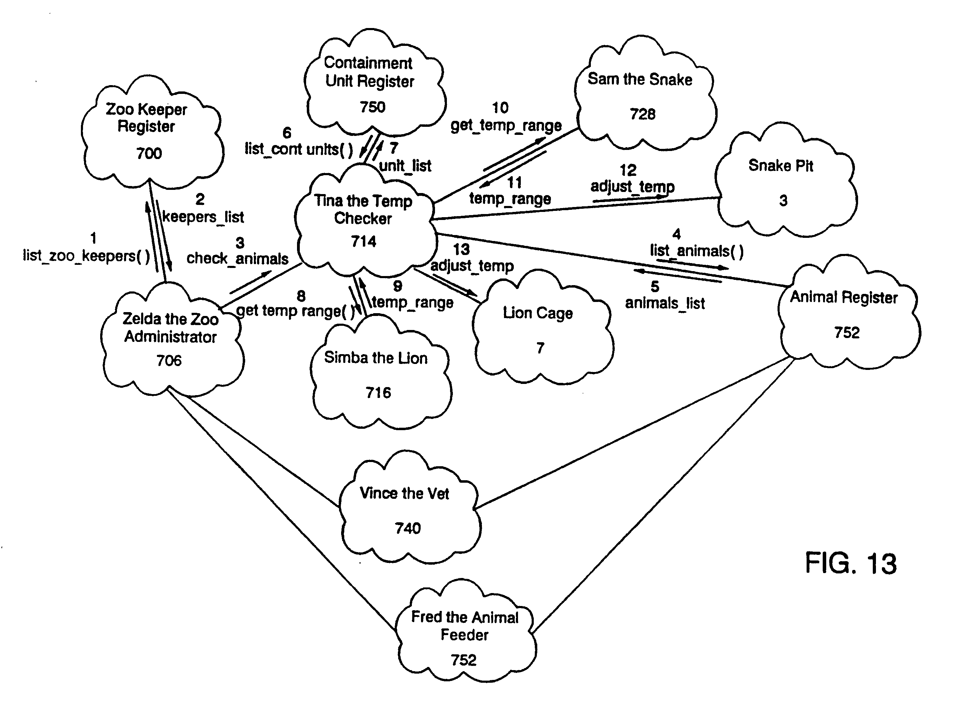

Figure 13 is an object diagram showing how the example objects of ZAF interact to assist zoo personnel in operating the zoo. A detailed analysis of the interaction of all of the ZAF objects is unnecessary for the purposes of this overview. However, the reader should review the following simple control flow to obtain a rudimentary understanding of how objects interact to solve problems.

As mentioned, an object is created to be a member of a particular class. Therefore, Zelda the Zoo Administrator [object 706] is an object that is a member (actually the only member) of the zoo administrator class. As such, object Zelda is responsible for overall control of ZAF. All of the zoo keeper objects have registered with the Zoo Keeper Register object [object 700]. Therefore, object Zelda obtains a list of the current zoo keepers by calling the list zoo_keepers() operation [step I] of the Zoo Keeper Register object. The Zoo Keeper Register object has been created as a member of the zoo keeper register class. For the purposes of illustration, assume that this occurs every five minutes as part of Zelda's 5_minute_timer() operation. The Zoo Keeper Register object then responds with the zoo keepers list [step 2]. The list of zoo keepers includes Tina the Temperature Checker [object 714], vince the vet. [object 740], and Fred the Animal Feeder [object 752]. Each zoo keeper has been created as a member of the zoo keepers class. In particular, objects Tina the Temp. Checker, Vince the vet., and Fred the Feeder are respectively members of the temperature controller, veterinarian, and feeder subclasses. Temp() operations is polymorphic. In other words, the check_animals() operation of object Tina does not require specialized knowledge about how each adjust_temp() operation performs its task. The check_animals() operation merely had to abide by the interface and call the adjust_temp() operations. After that, it is up to the individual adjust tempo operations to carry out their tasks in the proper manner.

At this point, it is again worthwhile to point out that the ZAF mechanism is an extremely simplistic framework mechanism that has been presented here to help novice readers understand some basic framework concepts so as to best appreciate the benefits and advantages of the present invention. These benefits and advantages will become more clear upon reference to the following portions of this Description.

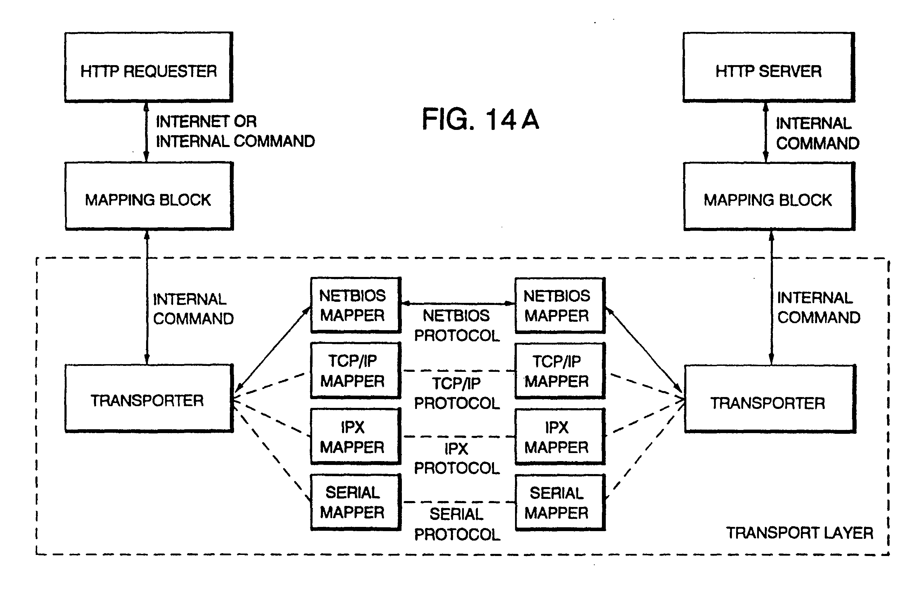

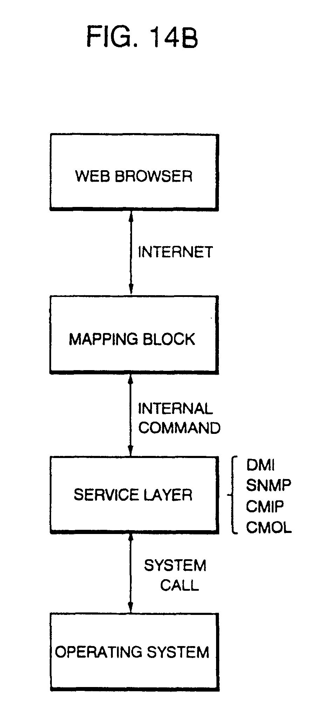

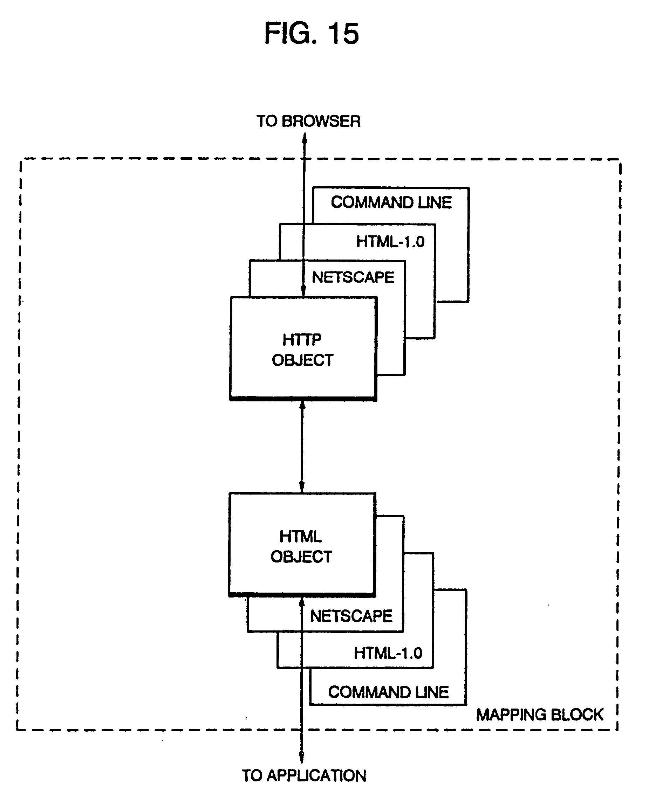

Referring now more particularly to Figures 14A, 14B and 15, Figures 14A and 14B may be understood in the context of the foregoing discussion as being illustrative of the framework of the present invention, while Figure 15 is illustrative of specific objects used within the framework. Figure 14B is a higher-level block diagram. Lower level details are shown in Figure 14A. The framework of Figures 14A and 14B has several elements:
the Web Browser
the Mapping Block
the Service Layer
the Operating System.

In accordance with this embodiment, the Mapping Block provides event monitoring and control of systems management protocols to any user with any browser on the internet. The Mapping Block translates data internal to the protocol service to HTML for viewing on the browser, and translates the user's inputs, as HTML, into controls of the protocol service.

The user of this invention monitors and controls the systems from the web Browser, which can be any of those available today.

The Mapping Block provides, over the internet, the Web Browser with static forms (in HTML) or dynamic applets (in, for instance, Java). These forms or applets provide monitoring information from the systems management protocol and/or provide means of entry for generation of events in the systems management protocol.

The user's inputs into the browser indicate what he wishes to monitor or how he wishes to control. The user's inputs are sent by the Browser back to the Mapping Block, within the instructions given by the form or applet. Data between the Mapping Block and Browser is transmitted, as is conventional today, in a standard language such as HTML over the internet using the HTTP protocol.

The Mapping Block communicates directly with the Service Layer of the systems management protocol. In effect, the Mapping Block becomes the GUI for the service. The Server translates the HTML received over the internet into commands given to the Service Layer, which executes the requests through the operating system.

This invention permits a platform-independent over-the-Internet browser for DMI, SNMP, CMIP, and CMOL systems management protocols.

The Mapping Block can be designed as an HTTP server which serves HTTP requests from the Web Browser, converting them into calls specific to the Service Layer. The data returned from the Service Layer is translated into HTML and returned to the Browser. This enables management of DMI, SNMP, CMIP, CMOL, or any other systems management protocol from an essentially platform-independent web browser.

As another embodiment, the framework of Figures 14 and 14B includes the following elements:
the HTTP Requester
the Mapping Block
the Transport Layer
the HTTP Server.

This embodiment of the invention provides a framework for the translation, through the Mapping Block, of the HTTP into the protocol independent commands used by the Transport Layer. The communication between the HTTP Requester and the Mapping Block can be one of two types. The Mapping Block could be a gateway HTTP server, accepting the HTTP request from TCP/IP and routing it through the Transport Layer with a NetBIOS, IPX, or serial protocol. This arrangement allows the use of generic web browsers to reach an HTTP server which is not connected directly to TCP/IP. For those computer installations without any TCP/IP connections, the HTTP requester, or web browser, must be integrated directly with the Mapping Block. The HTTP Server is always integrated with its Mapping Block.

This invention can be implemented by rewriting the back end of a browser to include the Mapping Block, or by developing the Mapping Block to serve as a gateway for the HTTP request sent by the browser.

As a still further embodiment, the framework of Figures 14A and 14B includes the following elements:
the Web Browser
the Mapping Block
the Transport Layer, and
the Systems Management Base.

In accordance with this embodiment, the Mapping Block enables providing systems management monitoring and control to any user with any browser on the Internet. The Mapping Block translates data internal to the systems management software to HTML for viewing on the browser, and translates the user's inputs, as HTML, into controls for the systems management software. The framework will be here referred to as a management framework. With the exception of the web browser, the elements of the framework may execute on the server computer system. A user of this invention monitors and controls the systems under management from any generic web browser.

The Mapping Block provides the web browser, over the Internet, with static forms (in HTML) or dynamic applets (in, for instance, Java). These forms or applets provide monitoring information from the systems under management and/or provide means of entry for control of the systems under management by access to the Systems Management Base through the Transport Layer. The user's inputs into the browser indicate what he wishes to monitor or how he wishes to control. The user's inputs are sent by the browser back to the Mapping Block, within the instructions given by the form or applet.

Data exchanged between the Mapping Block and the web browser is transmitted, as is conventional today, in a standard language such as HTML over the Internet using the HTTP protocol.

The Mapping Block communicates with the systems under management through a Transport Layer and a Systems Management Base. In effect, the Mapping Block becomes the GUI in the GUI-Base paradigm. The Mapping Block translates the HTML received over the Internet into protocol-independent commands given to the Transport Layer.

The Transport Layer transmits these commands between systems over NetBIOS, TCP/IP, IPX, or Serial links.

The Systems Management Base receives the command from the Transport Layer. It then executes the user's instructions or requests the desired monitoring from the computer system itself.

The services available at the Systems Management Base which this invention can control through the web include the following:
System Information Tool: provides comprehensive information on the hardware and software configurations of the system.
System Monitor Service: allows the monitoring of measurable quantities in the system. These quantities may be viewed, gathered, and exported to a database. Furthermore, thresholds may be set on them to trigger alerts.
System Partition Access Service: allows the viewing and control of the system partition of a system.
Alert Manager Service: allows the viewing of the alert log, setting actions to be taken on alerts, defining profiles which encapsulate alert classes, and requesting alerts by profile from alert collectors.
Security Manager Service: allows the defining of users and passwords to restrict access on a service-level. Also allows the setting of alerts on secure access.
ECC Memory Service: allows monitoring and alerting on ECC memory error and failure.
Predictive Failure Analysis Service: allows monitoring and alerting on disk error and failure.
System Profile Service: allows definition and entry of important accounting and inventory information on the system.
Critical File Monitor: allows monitoring and alerting of files to detect the changes in those files.
NetFinity Serial Control: allows definition and set-up of serial lines for communication by internal protocols.
RAID Management: allows control of RAID drives and monitoring and alerting on RAID drive errors and failures.
Remote Session Service: allows terminal shell capability on remote systems.
File Transfer Service: allows transfer of files or directories between the local system and a remote system.
Screen view Service: allows the capture and viewing of the visible screen on the local or remote system, as well as capture of the system input and output in real time.
Remote System Manager Service: allows the definition and maintenance of groups of systems. Also allows alerting on the status or presence of systems.
ServerGuard Support Service: allows monitoring of and alerting on the state of hardware monitors (power supplies, temperature, etc.) on server systems.
Event Scheduler Service: allows the definition and activation of scheduled services or commands.
Power-On Error Detect: allows alerting and capture of errors which occur between power-on and boot of a system.
Database Support: allows setting and arranging of parameters for database exportation of service data.
Software Inventory: allows definition and monitoring of software installed on the system.
DMI Browser: allows the viewing and generation of DMI events.
Reporting: allows the design, generation, and viewing of reports produced from various monitoring services. This reporting serves as a static base of historical data which complements the real-time data delivered by the various services. Furthermore, these reports are likely to be consumed by people far removed from systems management duties. Having the platform-independent web interface is especially valuable for that purpose.

An HTTP server has been written as a mapping layer which accepts HTML on a port connected to the Internet. This server is mostly a rewriting of the graphical user interfaces to each of the services already present in known systems management programs, such as the IBM offering known as NetFinity (NetFinity is a trademark of International Business Machines Corporation). The key difference is that, instead of interacting with a windowing system, the server interacts with HTML.

Moreover, many powerful systems management capabilities are natural to the web/browser paradigm and more difficult in dedicated GUIs.

The objects found within the Mapping Block are more fully illustrated in Figure 15, which shows the internals of the Mapping Block. As seen in Figure 14, the Mapping Block resides between the Web Browser and the application being observed and controlled over the Internet. The Mapping Block is composed of two objects: the HTTP Object and the HTML Object.

The HTTP Object is responsible for the following:
+ opening and maintaining the Internet communication,
+ accepting the HTTP request over the Internet,
+ parsing the Uniform Resource Locator (URL) and any other data that forms the request,
+ transmitting the URL, the input data, and the browser identity to the HTML Object,
+ accepting the HTML source from the HTML Object and returning it to the requesting browser.

As shown in Figure 15, the HTTP Object can be further subclassed by browser type. Acting in this way, the HTTP Object would behave as an HTML filter, massaging the HTML source returned by the HTML Object into source that could be better used by the particular browser. Three example "browsers" are given in Figure 15. When serving a fully functional browser such as the commercially available product known as NetScape, the HTTP Object may make no changes at all to the HTML it transfers from the HTML object to the browser. However, when serving a less capable browser, e.g., one which only correctly handles HTML 1.0, HTML source components which require more advanced servicing would be filtered into source that can be displayed meaningfully in such an environment. Furthermore, the HTTP Object can be subclassed to handle a command line "browser". In this case, HTML must be radically altered, stripping away all markup and inserting appropriate spacing, to be meaningfully displayed on a terminal screen.

The HTML Object is responsible for the following:
+ accepting the URL and other request data,
+ understanding those requests and forming them in the interface representation of the application,
+ accepting the replies from the application,
+ converting those replies to HTML and sending the HTML to the HTTP object.

As shown in Figure 15, the HTML Object can also be further subclassed by browser type. As with the HTTP Object, the purpose of this subclassing is to produce HTML that is best understood by the specific type of browser. However, the HTTP Object simply takes HTML as input and can only act as an HTML/HTML or HTML/ASCII filter, giving no meaning to the actual data represented by the input HTML. In contrast, at the stage of the HTML Object, the designer of the interface with the application still knows what the data truly represents. He can therefore react to the choice of browser at this stage, and format the data into HTML or ASCII depending on the identity of that browser. A simple example might be the requesting by the browser of a graph. If the browser is a NetScape browser, the HTML Object might generate a graph sent as a GIF; on the other hand, if the "browser" is a command line, the browser would generate an ASCII approximation of the graph.

Two objects are involved according to an embodiment of the present invention.

The first object is an HTTP object. This object encapsulates the HTTP connection.
Its members are:
the TCP/IP socket
the requested URL
Its methods are:
get the path
get the service
get the user
get the password
get the capability
get the particular arguments.

The second object is an HTML object. This object encapsulates the HTML/application interface.
Its members are:
HTML data
Its methods are:
adding text
adding of markup
adding of browser-specific markup.

This embodiment of the invention is implemented as a set of class libraries for the HTTP object and HTML object. The HTML object would be subclassed to provide markup features specific to particular browsers. This invention is used to tailor the HTML generated by the web server to specific browsers, for example, MVS or VT100 browsers.

## Claims

1. An information handling system for enabling a client computer device to access information located at a server computer device via a network between said client and server computer devices, said network using a network transmission protocol other than HTTP and using a network data format other than HTML, said client computer device containing means for communicating with said server computer device using HyperText Transfer Protocol (HTTP) and means for presenting information received from said server computer device to a user of the client computer device using HyperText Markup Language (HTML), said information handling system comprising:
a transmission protocol conversion means for converting HTML/HTTP information sent out from or received by said client computer device, via said network, to said network transmission protocol and said network data format; and
a transmission protocol conversion means for converting HTML/HTTP information sent out from or received by said server computer device, via said network, to said network transmission protocol and said network data format.

2. The system of claim 1 wherein said transmission protocol conversion means runs object oriented computer software.

3. The system of claim 1 wherein said client computer device is connected to the Internet and said network is located between the Internet and the server computer device.

4. The system of claim 1:
wherein said client computer device's means for presenting information uses a specific type of graphical user interface,
wherein said client computer device is connected to the Internet and said network is located between the Internet and the server computer device, and
wherein said transmission protocol conversion means runs object oriented computer software which includes:
an HTML object which accepts HTML request data from said client computing device and converts the accepted HTML request data to the network data format; and
an HTTP object which opens and maintains Internet communication between said client and server computer devices, parses the HTML request data received from the client computing device, detects the identity of the specific graphical user interface used by said client computer device, transmits the request data and detected graphical user interface identity to the HTML object, and transfers HTML data between said HTML object and said client computer device via said network and the Internet.

5. The system of claim 3 wherein said server computer device includes system management means for running a system management software program, said network protocol is a systems management protocol and HTML/HTTP data from said client computer device includes commands to control said system management program.

6. The system of claim 5 wherein said system management software processes data concerning hardware and software configurations of said client and server computer devices.

7. A program element for an information handling system comprising:
a mapping block which, when run on said information handling apparatus, maps data to and from (a) HTML and HTTP and (b) commands and protocol other than HTML and HTTP, said mapping block having an HTML object and an HTTP object;
said HTML object accepting URL and other request data; forming accepted requests into internal commands and protocol other than HTML and HTTP; accepting replies in internal commands and protocol other than HTML and HTTP; converting accepted replies to HTML; and sending such HTML to said HTTP object;
said HTTP object opening and maintaining Internet communication; accepting HTTP requests over the Internet; parsing the Uniform Resource Locator (URL) and associated data that forms an accepted request; transmitting the URL and associated data and browser program identity to said HTML Object; accepting HTML source from said HTML Object; and returning HTML source to the Internet as HTTP responses.

8. A program element according to Claim 7 wherein said HTML object has as its members:
the TCP/IP socket; and
the requested URL;
and further has as its methods:
get the path;
get the service;
get the user;
get the password;
get the capability;
get the particular arguments.

9. A program element according to Claim 7 wherein said HTTP object has as its members:
HTML data;
and further has as its methods:
adding text;
adding of markup; and
adding of browser-specific markup.

## Patentansprüche

1. Datenhandhabungssystem, um einer Client-Rechnereinheit den Zugriff auf Daten, die sich auf einer Server-Rechnereinheit befinden, über ein Netzwerk zwischen der Client-Rechnereinheit und der Server-Rechnereinheit zu ermöglichen, wobei das Netzwerk ein anderes Netzwerkübertragungsprotokoll als HTTP und ein anderes Netzwerkdatenformat als HTML verwendet, wobei die Client-Rechnereinheit ein Mittel zur Kommunikation mit der Server-Rechnereinheit unter Verwendung des HyperText Transfer Protocol (HTTP) und ein Mittel zur Darstellung von Daten, die sie von der Server-Rechnereinheit empfangen hat, für einen Benutzer der Client-Rechnereinheit unter Verwendung der HyperText Markup Language (HTML) enthält, wobei das Datenhandhabungssystem Folgendes umfasst:
ein Übertragungsprotokoll-Umwandlungsmittel, um HTML/HTTP-Daten, die von der Client-Rechnereinheit über das Netzwerk ausgesendet oder empfangen wurden, in das Netzwerkübertragungsprotokoll und das Netzwerkdatenformat umzuwandeln; und
ein Übertragungsprotokoll-Umwandlungsmittel, um HTML/HTTP-Daten, die von der Server-Rechnereinheit über das Netzwerk ausgesendet oder empfangen wurden, in das Netzwerkübertragungsprotokoll und das Netzwerkdatenformat umzuwandeln.

2. System nach Anspruch 1, wobei das Übertragungsprotokoll-Umwandlungsmittel objektorientierte Rechnersoftware ausführt.

3. System nach Anspruch 1, wobei die Client-Rechnereinheit mit dem Internet verbunden ist und sich das Netzwerk zwischen dem Internet und der Server-Rechnereinheit befindet.

4. System nach Anspruch 1:
wobei das Mittel der Client-Rechnereinheit zur Darstellung von Daten eine bestimmte Art einer grafischen Benutzeroberfläche verwendet,
wobei die Client-Rechnereinheit mit dem Internet verbunden ist und sich das Netzwerk zwischen dem Internet und der Server-Rechnereinheit befindet, und
wobei das Übertragungsprotokoll-Umwandlungsmittel objektorientierte Rechnersoftware ausführt, die Folgendes enthält:
ein HTML-Objekt, das HTML-Anforderungsdaten von der Client-Rechnereinheit entgegennimmt und die entgegengenommenen HTML-Anforderungsdaten in das Netzwerkdatenformat umwandelt; und
ein HTTP-Objekt, das die Internet-Verbindung zwischen der Client-Rechnereinheit und der Server-Rechnereinheit öffnet und aufrechterhält, die von der Client-Rechnereinheit empfangenen HTML-Anforderungsdaten auswertet, die Kennung der bestimmten grafischen Benutzeroberfläche, die von der Client-Rechnereinheit verwendet wird, feststellt, die Anforderungsdaten und die festgestellte Kennung der grafischen Benutzeroberfläche an das HTML-Objekt überträgt und HTML-Daten zwischen dem HTML-Objekt und der Client-Rechnereinheit über das Netzwerk und das Internet überträgt.

5. System nach Anspruch 3, wobei die Server-Rechnereinheit ein Systemverwaltungsmittel zur Ausführung eines Systemverwaltungs-Softwareprogramms enthält, wobei das Netzwerkprotokoll ein Systemverwaltungsprotokoll ist und HTML/HTTP-Daten von der Client-Rechnereinheit Befehle zur Steuerung des Systemverwaltungsprogramms enthalten.

6. System nach Anspruch 5, wobei die Systemverwaltungssoftware Daten verarbeitet, die Hardwareund Software-Konfigurationen der Client- und der Server-Rechnereinheit betreffen.

7. Programmelement für ein Datenhandhabungssystem, das Folgendes umfasst:
einen Abbildungsblock, der, wenn er auf der Datenhandhabungsvorrichtung ausgeführt wird, Daten in und aus (a) HTML und HTTP und b) andere Befehle und ein anderes Protokoll als HTML und HTTP abbildet, wobei der Abbildungsblock über ein HTML-Objekt und ein HTTP-Objekt verfügt;
wobei das HTML-Objekt den URL und andere Anforderungsdaten entgegennimmt; entgegengenommene Anforderungen in andere interne Befehle und ein anderes Protokoll als HTML und HTTP umbildet; Antworten in anderen internen Befehlen und einem anderen Protokoll als HTML und HTTP entgegennimmt; entgegengenommene Antworten in HTML umwandelt; und diese HTML an das HTTP-Objekt sendet;
wobei das HTTP-Objekt eine Internet-Verbindung öffnet und aufrechterhält; HTTP-Anforderungen über das Internet entgegennimmt; den Uniform Resource Locator (URL) und zugehörige Daten, die eine entgegengenommene Anforderung bilden, auswertet; den URL, zugehörige Daten und die Kennung des Browser-Programms an das HTML-Objekt überträgt; die HTML-Quelle von dem HTML-Objekt entgegennimmt; und die HTML-Quelle in Form von HTTP-Antworten an das Internet zurücksendet.

8. Programmelement nach Anspruch 7, wobei das HTML-Objekt als seine Teilkomponenten Folgende hat:
den TCP/IP-Anschluss; und
den angeforderten URL;
und ferner als seine Verfahren die Folgenden hat:
get the path;
get the service;
get the user;
get the password;
get the capability;
get the particular arguments.

9. Programmelement nach Anspruch 7, wobei das HTTP-Objekt als seine Teilkomponenten Folgende hat:
HTML-Daten;
und ferner als seine Verfahren die Folgenden hat:
adding text;
adding of markup; und
adding of browser-specific markup.

## Revendications

1. Système de gestion d'informations destiné à permettre à un dispositif informatique client d'accéder à des informations localisées à un dispositif informatique serveur par l'intermédiaire d'un réseau entre lesdits dispositifs informatiques client et serveur, ledit réseau utilisant un protocole de transmission de réseau autre que HTTP et utilisant un format de données de réseau autre que HTML, ledit dispositif informatique client contenant un moyen destiné à communiquer avec ledit dispositif informatique serveur en utilisant un protocole de transfert hypertexte (HTTP) et un moyen destiné à présenter des informations reçues dudit dispositif informatique serveur à un utilisateur du dispositif informatique client en utilisant un langage de balisage hypertexte (HTML), ledit système de gestion d'informations comprenant :
un moyen de conversion de protocole de transmission destiné à convertir des informations HTML/HTTP émises depuis ledit dispositif informatique client ou reçues de celui-ci, par l'intermédiaire dudit réseau, en ledit protocole de transmission de réseau et ledit format de données de réseau, et
un moyen de conversion de protocole de transmission destiné à convertir des informations HTML/HTTP émises depuis ledit dispositif informatique serveur ou reçues de celui-ci, par l'intermédiaire dudit réseau, en ledit protocole de transmission de réseau et ledit format de données de réseau.

2. Système selon la revendication 1, dans lequel ledit moyen de conversion de protocole de transmission exécute un logiciel informatique orienté objet.

3. Système selon la revendication 1, dans lequel ledit dispositif informatique client est relié au réseau Internet et ledit réseau est situé entre le réseau Internet et le dispositif informatique serveur.

4. Système selon la revendication 1 :
dans lequel ledit moyen du dispositif informatique client destiné à présenter des informations utilise un type spécifique d'interface graphique d'utilisateur,
dans lequel ledit dispositif informatique client est relié au réseau Internet et ledit réseau est situé entre le réseau Internet et le dispositif informatique serveur, et
dans lequel ledit moyen de conversion de protocole de transmission exécute un logiciel informatique orienté objet qui comprend :
un objet HTML qui reçoit les données de demande HTML dudit dispositif informatique client et convertit les données de demande HTML reçues en le format de données du réseau, et
un objet HTTP qui ouvre et entretient une communication Internet entre lesdits dispositifs informatiques client et serveur, analyse les données de demande HTML
reçues du dispositif informatique client, détecte l'identité de l'interface graphique d'utilisateur spécifique utilisée par ledit dispositif informatique client, transmet les données de demande et l'identité détectée de l'interface graphique d'utilisateur à l'objet HTML, et transfère les données HTML entre ledit objet HTML et ledit dispositif informatique client par l'intermédiaire dudit réseau et du réseau Internet.

5. Système selon la revendication 3, dans lequel ledit dispositif informatique serveur comprend un moyen de gestion de système destiné à exécuter un programme de logiciel de gestion de système, ledit protocole de réseau est un protocole de gestion de système et des données HTML/HTTP provenant dudit dispositif informatique client comprennent des commandes pour commander ledit programme de gestion de système.

6. Système selon la revendication 5, dans lequel ledit logiciel de gestion de système traite des données concernant des configurations matérielles et logicielles desdits dispositifs informatiques client et serveur.

7. Elément de programme destiné à un système de gestion d'informations comprenant:
un bloc de mappage qui, lorsqu'il est exécuté sur ledit dispositif de gestion d'informations, mappe des données vers et depuis (a) le format HTML et HTTP et (b) des commandes et un protocole autre que HTML et HTTP, ledit bloc de mappage comportant un objet HTML et un objet HTTP,
ledit objet HTML recevant des données de localisation URL et d'autres données de demande, mettant en forme les demandes reçues en des commandes internes et un protocole autre que HTML et HTTP, recevant des réponses dans des commandes internes et un protocole autre que HTML et HTTP, convertissant les réponses reçues en langage HTML, et envoyant un tel format HTML audit objet HTTP,
ledit objet HTTP ouvrant et entretenant une communication Internet, recevant des demandes HTTP sur le réseau Internet, analysant le localisateur de ressources uniformisé (URL) et des données associées qui forment une demande reçue, transmettant la localisation URL et des données associées ainsi qu'une identité du programme de navigateur audit objet HTML, acceptant une source HTML depuis ledit objet HTML, et renvoyant une source HTML au réseau Internet en tant que réponses HTTP.

8. Elément de programme selon la revendication 7, dans lequel ledit objet HTML comporte en tant que ses éléments :
le point de communication TCP/IP, et
la localisation URL demandée,
et comporte en outre en tant que ses méthodes :
obtenir la voie,
obtenir le service,
obtenir l'utilisateur,
obtenir le mot de passe,
obtenir la possibilité,
obtenir les arguments particuliers.

9. Elément de programme selon la revendication 7, dans lequel ledit objet HTTP possède en tant que ses membres :
des données HTML,
et possède en outre en tant que ses méthodes :
addition d'un texte,
addition d'un balisage, et
addition d'un balisage spécifique au navigateur.
